# EUROPEAN PATENT SPECIFICATION

(11) **EP 2 339 862 B1**
(45) Date of publication and mention of the grant of the patent: **15.07.2015**
(21) Application number: 10189682.7
(22) Date of filing: 02.11.2010
(51) Int. Cl.: H04N 13/00

(54) **Display panel module, semiconductor integrated circuit, drive method of pixel array unit and electronic apparatus**
Anzeigemodul, integrierte Halbleiterschaltung, Ansteuerverfahren einer Pixelmatrix und elektronische Vorrichtung
Module d'affichage, circuit intégré semi-conducteur, procédé de commande d'une matrice de pixels et appareil électronique

(30) Priority: 24.12.2009 JP 2009292901
(43) Date of publication of application: 29.06.2011
(73) Proprietor: JOLED INC., Tokyo 101-0054 (JP)
(72) Inventor: Hasegawa, Hiroshi, Minato-ku, Tokyo 108-0075 (JP); Handa, Tomoaki, Shinagawa-ku, Tokyo 141-0031 (JP)
(74) Representative: Ealey, Douglas Ralph

(56) References cited:
- US-A1- 2007 035 483
- US-A1- 2007 222 718
- US-A1- 2008 030 495
- US-A1- 2010 091 207

## Description

The present invention relates to a display panel module, semiconductor integrated circuit, drive method of pixel array unit and electronic apparatus

Embodiments of the invention proposed in the specification can be applied to a display panel module, a semiconductor integrated circuit, a drive method of a pixel array unit and an electronic apparatus on which the display panel module is mounted.

Up to the present days, the display panel module has been widely used as a display device for images taken from a single view point (referred to as 2D images in the following description). However, a display device displaying images taken by using binocular parallax (referred to as 3D images in the following description) and allowing a user to perceive the images as stereoscopic images has been developed in recent years. The 2D images actually occupy most of the amount of existing contents.

Accordingly, it is assumed that a device which can display both 2D images and 3D images will be necessary for the future display panel module.

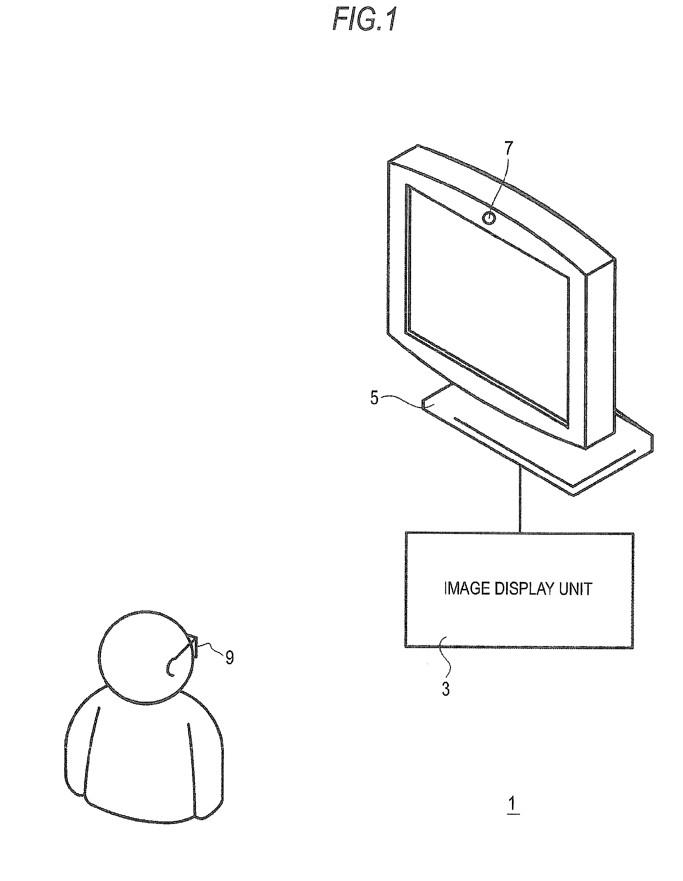

Fig. 1 shows a construction example of an image system which can display both 2D images and 3D images. An image system 1 has a structure preferable to be used when 2D images and 3D images are displayed at the same screen size.

The image system 1 includes an image playback unit 3, a display device 5, an infrared light emitting unit 7 and liquid crystal shutter glasses 9. In these devices, the image playback unit 3 is a video apparatus having a function of playing back both 2D images and 3D images, including a set top box and a computer in addition to the so-called image playback device. The display device 5 is an output device of input image data, including a monitor in addition to a so-called television receiver.

The infrared light emitting unit 7 is a device for notifying the liquid crystal shutter glasses 9 of display timing of a left-eye image and a right-eye image or switching timing of display by using infrared light. Fig. 1 shows an example in which the infrared light emitting unit 7 is provided in the vicinity of the center of an upper frame portion of the display device 5. The liquid crystal shutter glasses 9 are one item of accessories which are necessary to be worn by a user at the time of displaying 3D images. It is not necessary as a matter of course that the liquid crystal shutter glasses 9 are worn by the user at the time of displaying 2D image. The means for notifying the liquid crystal shutter glasses 9 of the display timing or the switching timing of display is not limited to infrared light.

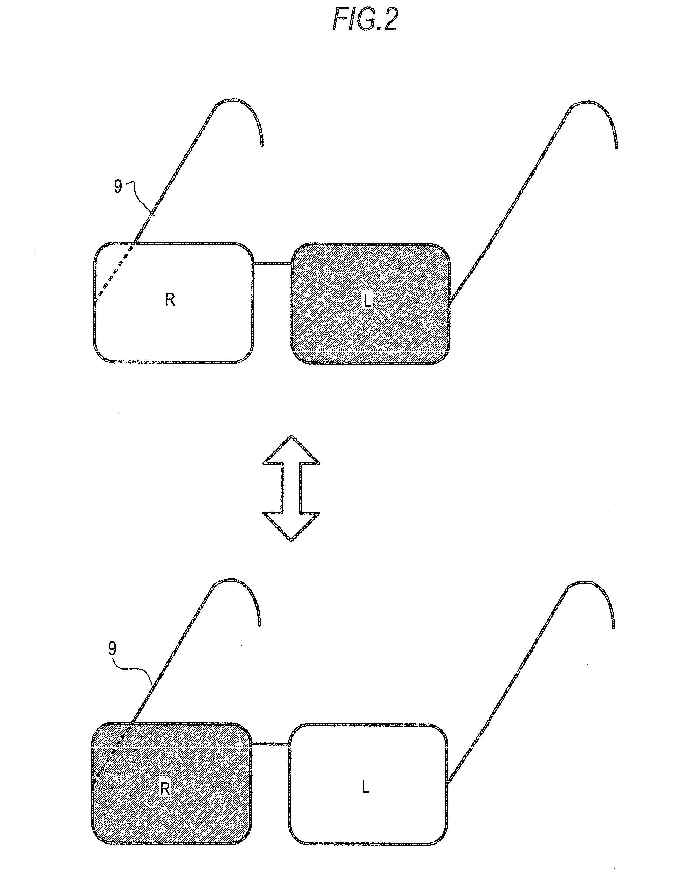

Fig. 2 shows an operation image of the liquid crystal shutter glasses 9. In the drawing, a picture displayed in white in a frame denotes that the liquid crystal shutter is in an open state, that is, a state in which outer light can be transmitted. A picture displayed with hatching in a frame denotes that the liquid crystal shutter is in a closed state, that is, a state in which outer light is not transmitted.

As shown in Fig. 2, during display of 3D images, two liquid crystal shutters are not simultaneously in the open state, and any one of them is controlled to be in the open state in conjunction of switching with display images . Specifically, only the liquid crystal shutter for the left eye is controlled to be in the open state during display of the left-eye image, and only the liquid crystal shutter for the right eye is controlled to be in the open state during display of the right-eye image. In the image system 1, it is possible to view stereoscopic images by the complementary open/close operation of the liquid crystal shutters.

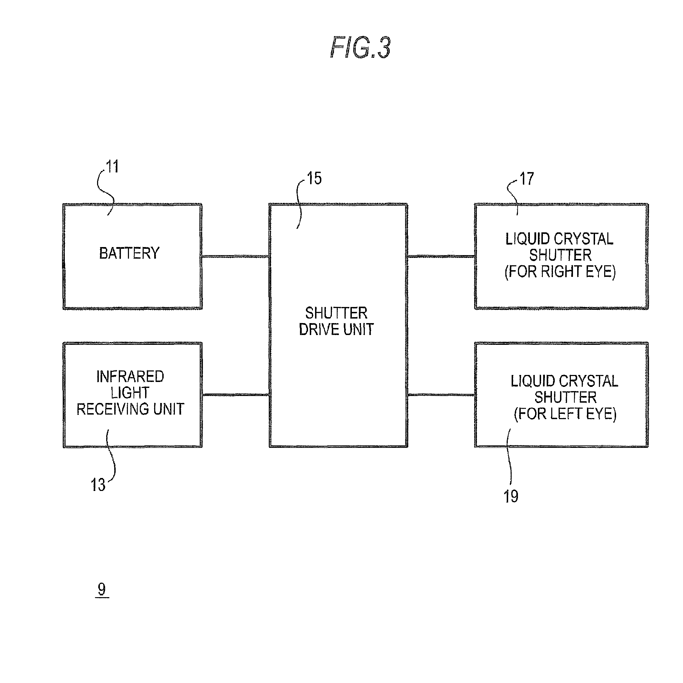

Fig. 3 shows an equivalent circuit of an electronic circuit portion of the liquid crystal shutter glasses 9. The liquid crystal shutter glasses 9 includes a battery 11, an infrared light receiving unit 13, a shutter drive unit 15 and liquid crystal shutters 17, 19.

The battery 11 is a lightweight and small battery such as a button battery. The infrared light receiving unit 13 is installed at a front portion of the glasses, which is an electronic component receiving infrared light on which switching information of display images is superimposed.

The shutter drive unit 15 is an electronic component which performs switching control of open/close of the liquid crystal shutter for the right eye 17 and the liquid crystal shutter for the left eye 19 so as to be synchronized with display images based on the received switching information.

In JP-A-2007-286623 (Patent document 1), there is disclosed an image system having a drive circuit for displaying 2D images and a drive circuit for displaying 3D images and switching the drive circuit used for driving a display panel in accordance with switching of display images.

Figs. 4A and 4B show a drive method disclosed in Patent Document 1. Figs. 4A and 4B show the relationship of drive periods when focusing on a given horizontal line.

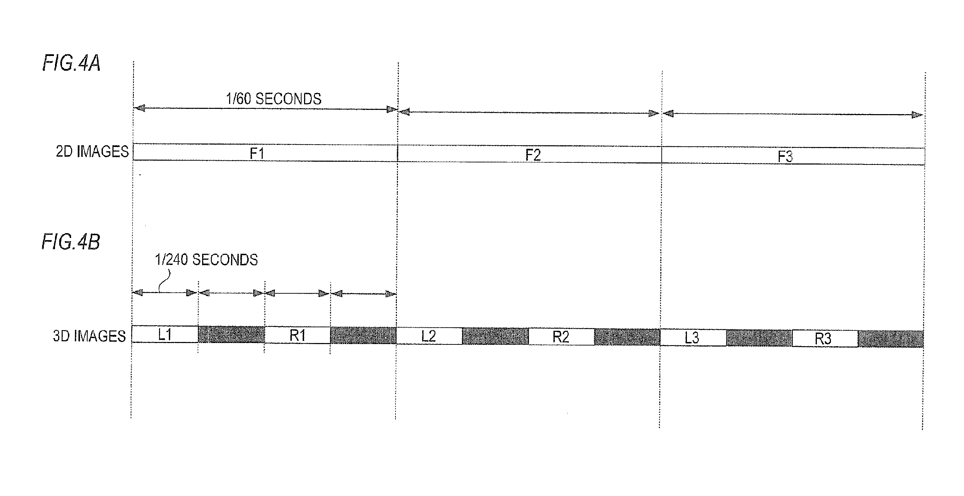

Figs. 4A and 4B show the relationship of operations at the time of displaying 2D images and 3D images which have been imaged at 60 frame per second on the display panel. The drive of the display panel is controlled by an active-matrix drive method.

Fig. 4A shows processing timing of 2D image data when focusing on the given horizontal line. As shown in Fig. 4A, a processing operation from writing to lighting of a frame image F is performed during 1/60 seconds at the time of inputting 2D images.

Fig. 4B shows processing timing of 3D image data when focusing on the given horizontal line. Periods represented by write bars are processing periods of left-eye images L or right-eye images and periods represented by black bars are processing periods of black screens. As shown in Fig. 4B, a processing operation from writing to lighting of the left-eye image L, a processing operation from writing to lighting of the black screen, a processing operation from writing to lighting of the right-eye image R and a processing operation from writing to lighting of the black screen are performed in a unit of 1/240 seconds at the time of inputting 3D images.

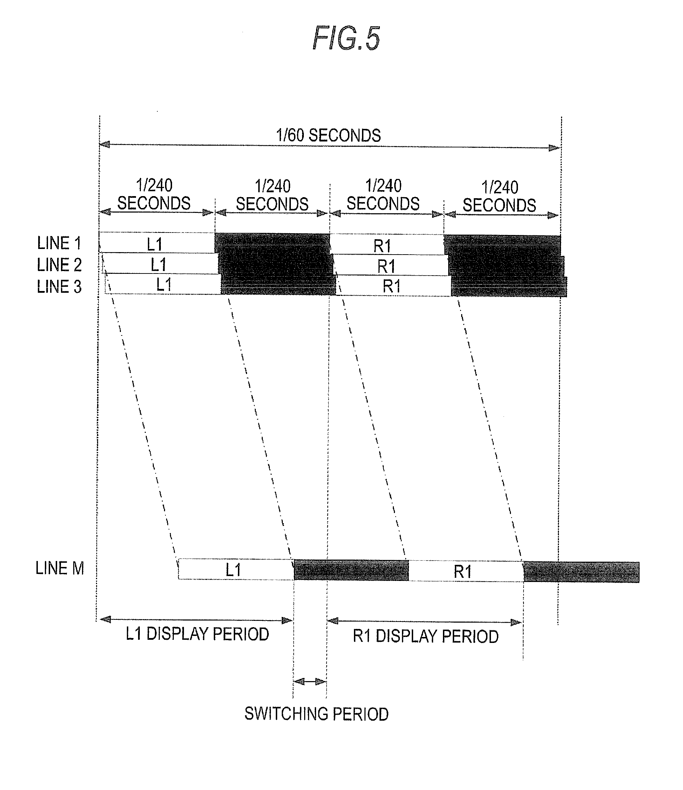

Here, the reason why the processing period of the black screen is inserted between the processing periods of the left-eye image L and the right-eye image R is for preventing left and right images on the screen from being displayed at the same time and mixed. Fig. 5 shows the operation principle thereof. Fig. 5 shows the relationship between processing timing of respective horizontal lines and display states viewed by the user. Also in the case of Fig. 5, write bar portions represent processing periods of the left-eye images L or the right-eye images R (mainly regarded as lighting periods) and periods shown by black bars indicate processing periods of black screens (mainly regarded as lighting periods).

As shown in Fig. 5, the start timing of displaying (lighting) the right-eye image R in the horizontal line of the head row can be delayed until after the end of displaying (lighting) the left-eye image L in the horizontal line of the last row. A period between the end of displaying (lighting) the left-eye image L in the horizontal line of the last row and the start of displaying (lighting) the right-eye image R in the horizontal line of the head row is assigned as a switching period of open/close states of the liquid crystal shutters.

As described above, the drive technique for displaying 3D images is disclosed in Patent Document 1. However, in the case of the drive system, it is necessary to drive the display panel at a speed which is actually four times (240 Hz) as high as a visible frame rate (60 Hz). This means that it is necessary to apply components having extremely high performance for a pixel array unit or drive circuits thereof, which may cause increase of manufacturing costs.

The same number of display periods of black screens as the display periods of 3D images will be necessary as shown in Fig. 5. Accordingly, in the case of related art in which the black screens are inserted, there is a problem that it is difficult to avoid screen luminance being reduced inevitably.

Additionally, in the system of switching the drive method at the time of displaying 2D images and at the time of 3D images as in the drive method shown in Patent Document 1, a functional configuration of switching the drive method by detecting the difference of image formats. Moreover, in the drive method shown in Patent Document 1, both the drive circuit for 2D images and the drive circuit for 3D images are necessary. Accordingly, there is a problem that a circuit layout will be complicated in addition to increase of the number of components.

Various respective aspects and features of the present invention are defined in the appended claims.

Embodiments described in the specification relate to a drive technique of a pixel circuit driving a current-driven self luminous device.

In view of the above problem, the inventors propose, as an embodiment,
a display panel module including
a pixel array unit in which sub-pixels each having a current-driven self luminous device and a pixel circuit controlling the drive of the self luminous device are arranged in a matrix state,
a signal line drive unit driving signal lines,
a writing control line drive unit controlling writing of potentials appearing at the signal lines to the sub-pixels and
a power supply control unit controlling supply and stop of drive power supply with respect to the sub-pixels, which satisfies the following conditions.

That is, the inventors propose the display panel in which the signal line drive unit, the writing control line drive unit and the power supply control unit operates at the common drive timing fixed so that display periods of adjacent frames do not overlap in either case in which 2D images and 3D images are displayed.

In this case, it is preferable that the writing control line drive unit controls writing timing based on a scanning clock of a given frequency and the that the power supply control unit controls timing of supplying drive power supply prescribing a lighting period of the self luminous devices based on the scanning clock which is the same as the writing control line control unit.

Furthermore, in this case, it is preferable that the power supply control unit supplies drive power supply prescribing the lighting period of the self luminous devices in the unit of given plural horizontal lines at the same timing in the order of completion of signal potential writing after waiting time of a given length passes after completion of the signal potential writing of a first horizontal line in which the signal potential writing is completed first as well as controls the length of the lighting period in one frame to be the same in all horizontal lines.

Furthermore, in this case, it is preferable that the waiting time and the lighting time are set so that display periods of respective frames given during a period from the start of lighting the first horizontal line to the end of lighting a second horizontal line in which signal potential writing is completed last do not overlap between adjacent frames.

Furthermore, it is preferable that the signal lie drive unit, the writing control line drive unit and the power supply control unit are operated at common drive timing in either case in which 2D images and 3D images are displayed on a screen.

Furthermore, in this case, it is preferable that the frequency of the scanning clock is set to correspond to a horizontal scanning frequency.

Additionally, the inventors propose a semiconductor integrated circuit including drive circuits satisfying the above operation conditions. The inventors propose a drive method of the pixel array unit satisfying the above drive conditions. The inventors also propose an electronic apparatus on which the above display panel module is mounted. The electronic apparatus includes the display panel module, a system control unit controlling operations of the entire system and an operation input unit receiving operation input with respect to the system control unit.

In the case of the embodiments of the inventions proposed by the inventors, respective drive circuits can be operated in common drive timing in either case in which 2D image and 3D images are displayed. The writing of potentials appearing at the signal lines to the sub-pixels as well as supply and stop of the drive power supply with respect to the sub-pixels can by controlled by using the same scanning clock. Accordingly, it is not necessary to prepare drive circuits for 2D images and drive circuits for 3D images separately as in the related art. In the embodiments of the inventions proposed by the inventors, an operation of determining whether images are 2D images or 3D images is not necessary. Therefore, manufacturing costs can be reduced as compared with the display panel module applying the related art. Moreover, inconvenience such as deterioration of image quality and deterioration of characteristics do not occur in principle on viewing 2D images even while wearing the liquid crystal shutter glasses.

Embodiments of the invention will now be described with reference to the accompanying drawings, throughout which like parts are referred to by like references, and in which:
Fig. 1 is a conceptual view of an image system which can display both 2D images and 3D images;
Fig. 2 is a view explaining an operation state of liquid crystal shutter glasses used for viewing 3D images;
Fig. 3 is a diagram showing an equivalent circuit of an electronic function portion of the liquid crystal shutter glasses;
Figs. 4A and 4B are diagrams explaining a drive technique of 2D images and 3D images (related-art example);
Fig. 5 is a diagram explaining the relationship between processing timing of each horizontal line and display periods at the time of displaying 3D images (related-art example);
Fig. 6 is a view showing an outer structure example of an organic EL panel module;
Fig. 7 is a diagram explaining a system configuration of the organic EL panel module according to a first embodiment;
Fig. 8 is a diagram explaining an arrangement structure;
Fig. 9 is a diagram explaining a pixel structure example of a sub-pixel;
Fig. 10 is a diagram showing a circuit configuration example of a signal line drive unit;
Fig. 11 is a diagram showing a drive waveform example of a signal line;
Fig. 12 is a diagram showing a circuit configuration example of a writing control line drive unit;
Fig. 13 is a diagram showing a circuit configuration of a power supply control line drive unit according to the first embodiment;
Figs. 14A and 14B are diagram explaining drive techniques of 2D images and 3D images;
Figs. 15A to 15E are diagrams showing relationship between drive waveform examples of a sub-pixel and internal potentials;
Figs. 16A to 16E are diagrams showing relationship between drive waveform examples of the sub-pixel and internal potentials;
Figs. 17A to 17D are diagram explaining relationship between waiting time to the lighting start and horizontal lines;
Figs. 18A to 18D are diagrams explaining processing timing of each horizontal line and display periods at the time of displaying 3D images (related-art example);
Fig. 19 is a diagram showing an equivalent circuit of a sub-pixel at the time of a lighting operation;
Fig. 20 is a diagram showing an equivalent circuit of a sub-pixel at the time of a light-out operation during a non-light emitting period;
Fig. 21 is a diagram showing an equivalent circuit of a sub-pixel at the time of an initialization operation during the non-light emitting period;
Fig. 22 is a diagram showing an equivalent circuit of a sub-pixel at the time of the initialization operation during the non-light emitting period;
Fig. 23 is a diagram showing an equivalent circuit of a sub-pixel at the time of a threshold correction operation during the non-light emitting period;
Fig. 24 is a diagram showing an equivalent circuit of a sub-pixel corresponding to a completion point of the threshold correction operation;
Fig. 25 is a diagram showing an equivalent circuit of a sub-pixel corresponding to an operation from completion of the threshold correction operation to the start of writing a signal potential;
Fig. 26 is a diagram showing an equivalent circuit of a sub-pixel at the time of a writing operation of the signal potential;
Fig. 27 is a diagram showing an equivalent circuit of a sub-pixel at the time of a mobility correction operation;
Fig. 28 is a diagram showing an equivalent circuit of a sub-pixel corresponding to waiting time to the lighting start;
Fig. 29 is a diagram showing an equivalent circuit of a sub-pixel after the lighting start;
Fig. 30 is a diagram showing a system configuration of the organic EL panel module according to a second embodiment;
Fig. 31 is a diagram showing a circuit configuration of the power supply control line drive unit according to the second embodiment;
Figs. 32A to 32G are diagram explaining relationship between processing timing of each horizontal line and display periods at the time of displaying 3D images;
Fig. 33 is a diagram explaining a system configuration of the organic EL panel module according to a third embodiment;
Fig. 34 is a diagram showing a circuit configuration of the power supply control line drive unit according to the third embodiment;
Fig. 35 is a diagram showing a system configuration of the organic EL panel module according to a fourth embodiment;
Fig. 36 is a diagram showing a circuit configuration of the power supply control line drive unit according to the fourth embodiment;
Fig. 37 is a diagram explaining another circuit configuration example of the sub-pixel;
Fig. 38 is a diagram explaining another circuit configuration example of the sub-pixel;
Fig. 39 a diagram showing a conceptual configuration example of an electronic apparatus;
Fig. 40 is a view showing a product example of the electronic apparatus; and
Fig. 41 is a view showing a product example of the electronic apparatus.

Hereinafter, a case in which the invention is applied to an active-matrix drive organic EL panel module will be explained in the following order.
(A) Outer structure of the organic EL panel module
(B) Embodiment 1 (an exemplary embodiment where it does not also apply to subsequent embodiments)
(C) Embodiment 2 (Embodiment in which the light-emitting period and the non-light emitting period are controlled by using the same shift clock)
(D) Embodiment 3 (Embodiment in which the light-emitting period and the non-light emitting period are controlled by using the same shift clock)
(E) Other Embodiments

Concerning portions not particularly shown or described in the specification, well-known or publicly known techniques in the technical field is applied. The embodiments to be explained below are examples of the invention, and the invention is not limited to these embodiments.

### (A) Outer structure

In the specification, the display panel module will be used as two kinds of meanings. One of them is the display panel module in which a pixel array unit and drive circuits (for example, a signal line drive unit, a writing control line drive unit, a power supply control line drive unit and the like) are formed on a substrate by using a semiconductor process. The other of them is the display panel module in which drive circuits manufactured as ICs for particular applications are mounted on a substrate in which the pixel array unit is formed.

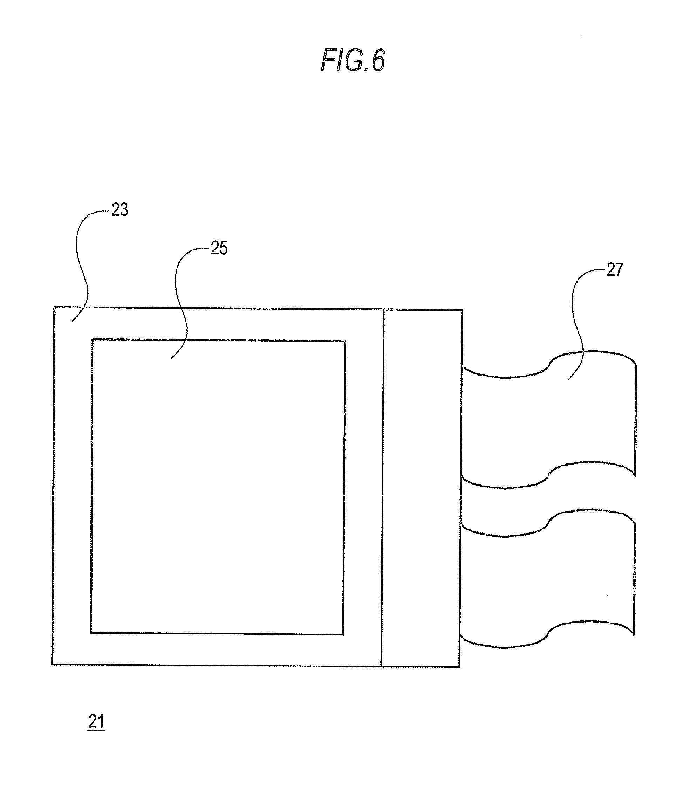

Fig. 6 shows an example of the outer structure of the organic EL panel module. An organic EL panel module 21 has a structure in which an opposite substrate 25 is bonded to a forming region of a pixel array unit in a support substrate 23.

The support substrate 23 is made of transparent base materials such as glass or plastic. The opposite substrate 25 is made of transparent base materials such as glass or plastic.

The opposite substrate 25 is a member for sandwiching a sealing material to seal a surface of the support substrate 23.

It is sufficient that the transparency of the substrate is secured at least on the light emitting side, and a non-transparent substrate may be used on the other substrate side. Additionally, a FPC (flexible print circuit) 27 for inputting external signals or drive power supply is disposed on the organic EL panel module 21.

### (B) Exemplary Embodiment 1

### (B-1) System configuration

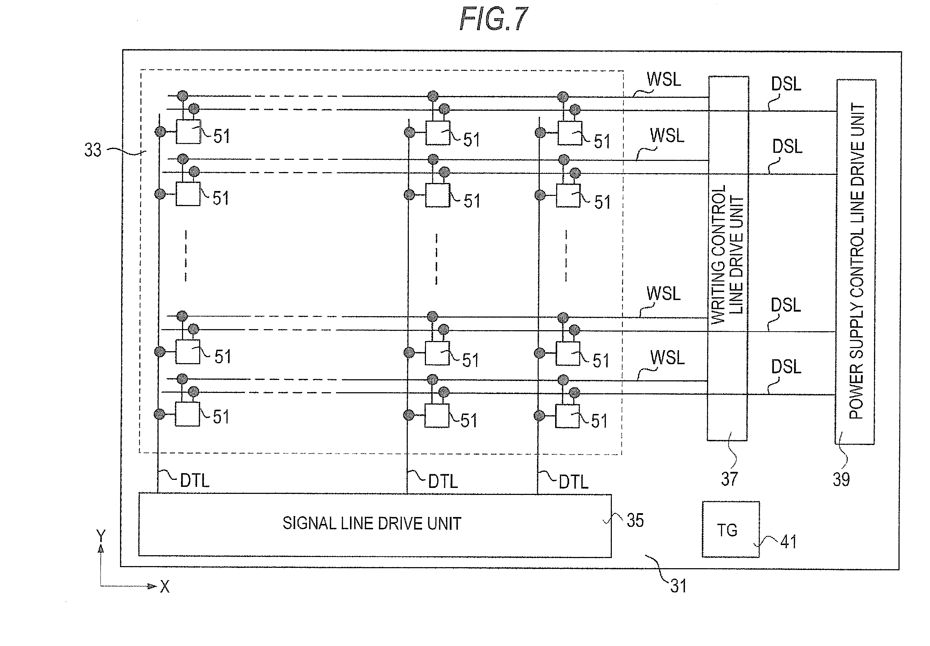

Fig. 7 shows a system configuration example of an organic EL panel module 31 according to the embodiment.

The organic EL panel module 31 shown in Fig. 7 includes a pixel array unit 33 and drive circuits thereof, which are a signal line drive unit 35, a writing control line drive unit 37, a power supply control line drive unit 39 and a timing generator 41. Among them, the power supply control line drive unit 39 corresponds to "a power supply control unit" in the appended claims.

### (a) Pixel array unit

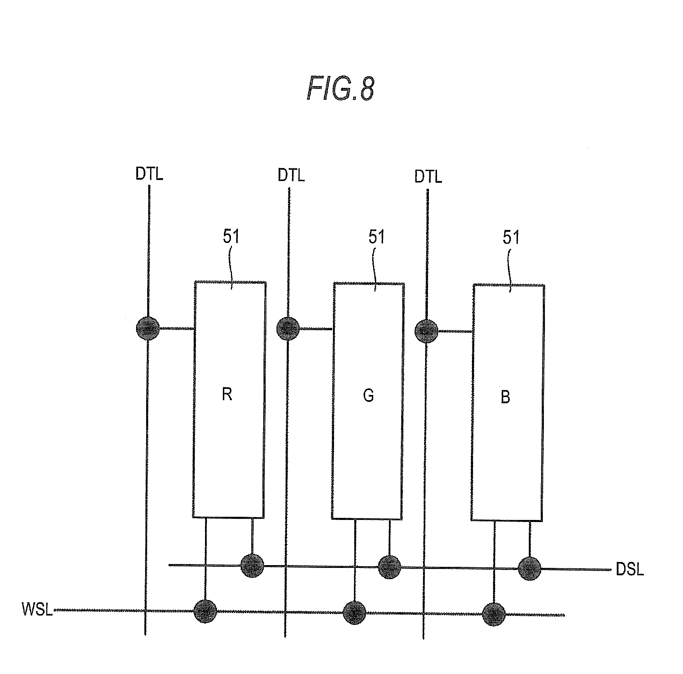

In the embodiment, pixels each configures a white unit are arranged in the pixel array unit 33 in a vertical direction and a horizontal direction in a screen with prescribed definitions respectively. Fig. 8 shows an arrangement structure of sub-pixels 51 which constitute the white unit. As shown in Fig. 8, the white unit is configured as aggregate of an R (red) pixel 51, a G (green) pixel 51 and a B (blue) pixel 51.

Assume that vertical definition of the pixel array unit 33 is M and horizontal definition thereof is N, the total number of sub-pixels in the pixel array unit 33 can be given by MxNx3.

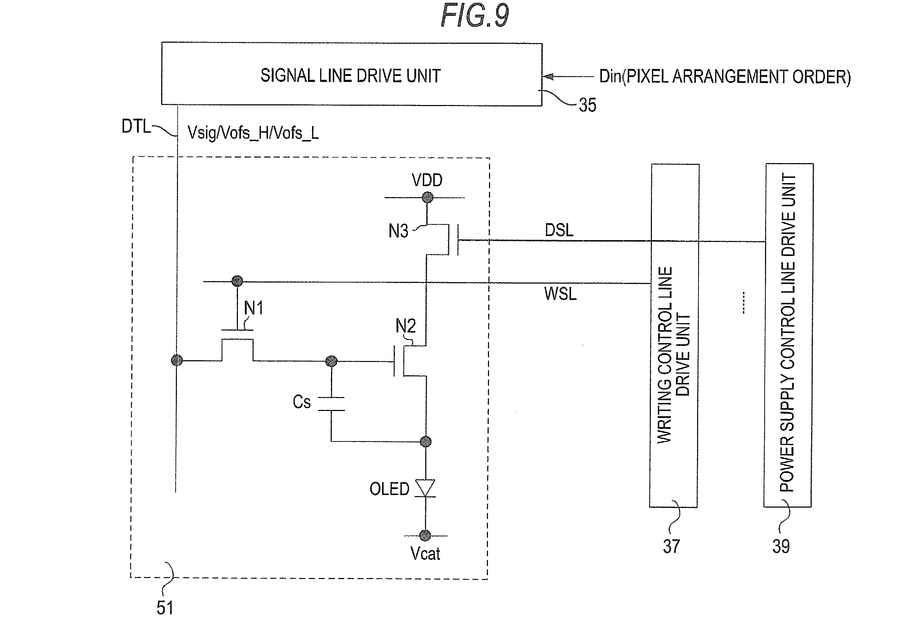

Fig. 9 shows the connection relationship between the sub-pixel 51 which is the minimum unit of a pixel structure included in the pixel array unit 33 and drive circuit units thereof.

In the case of the embodiment, the sub-pixel 51 includes N-channel thin-film transistors N1, N2 and N3, a storage capacitor Cs storing tone information and an organic EL device OLED as shown in Fig. 9. The thin-film transistor N1 is a switching device controlling writing of a potential appeared on a signal line DTL (referred to as a "signal line potential" in the following description). In the following description, the thin-film transistor N1 is referred to as a sampling transistor N1.

Additionally, the thin-film transistor N2 is a switching device supplying drive current having magnitude corresponding to the potential stored in the storage capacitor Cs to the organic EL device OLED. In the following description, the thin-film transistor N2 is referred to as a drive transistor N2.

Moreover, the thin-film transistor N3 is a switching device controlling supply and supply stop of a drive voltage VDD to one main electrode of the drive transistor N2. In the following description, the thin-film transistor N3 is referred to as a power supply control transistor N3.

### (b) Configuration of the signal line drive unit

The signal line drive unit 35 is a circuit device driving signal lines DTL. Respective signal lines DTL are arranged so as to extend in the vertical direction (Y-direction) of the screen and 3xN lines are arranged in the horizontal direction (X-direction) of the screen. In the embodiment, the signal line drive unit 35 drives the signal lines DTL by three values, which are a threshold correction potential Vofs_L, an initialization potential Vofs_H and a signal potential Vsig.

The threshold correction potential Vofs_L is a potential corresponding to, for example, a black level of in pixel tones. The threshold correction potential Vofs_L is used for operation of correcting variation of a threshold voltage Vth of the drive transistor N2 (referred to as a "threshold correction operation").

The initialization potential Vofs_H is a potential for cancelling the stored voltage of the storage capacitor Cs. The operation of cancelling the stored voltage of the storage capacitor Cs is referred to as an initialization operation in the following description.

The initialization potential Vofs_H is set to a higher voltage than the maximum value which can be applied as the signal potential Vsig corresponding to the pixel tone. Accordingly, even when the signal potential Vsig during a previous frame period is given at whatever potential, the stored voltage can be cancelled.

The signal drive unit 35 in the embodiment is operated at the same drive timing when displaying 2D images as well as when displaying 3D images.

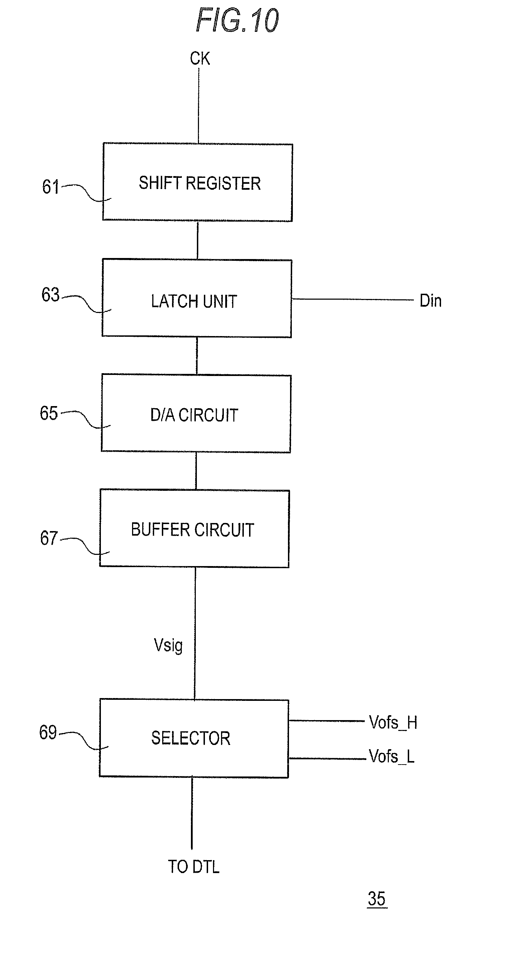

Fig. 10 shows an internal configuration example of the signal line drive unit 35. The signal line drive unit 35 includes a shift register 61, a latch unit 63, a digital/analog conversion circuit 65, a buffer circuit 67 and a selector 69.

The shift register 61 is a circuit device giving the timing of taking pixel data Din based on a clock signal CK. In the embodiment, the shift register 61 has at least 3xN delay stages corresponding to the number of the signal lines DTL. Therefore, the clock signal CK having 3xN pulses in one horizontal scanning period is used.

The latch unit 63 is a storage circuit taking the pixel data Din in a corresponding storage area based on the timing signal outputted from the shift register 61.

The digital/analog conversion circuit 65 is a circuit device converting the pixel data Din taken by the latch unit 63 into an analog signal voltage Vsig. Conversion characteristics of the digital/analog conversion circuit 65 are prescribed by an H-level reference potential Vref_H and an L-level reference potential Vref_L.

The buffer circuit 67 is a circuit device converting a signal amplitude into a signal level suitable for panel drive.

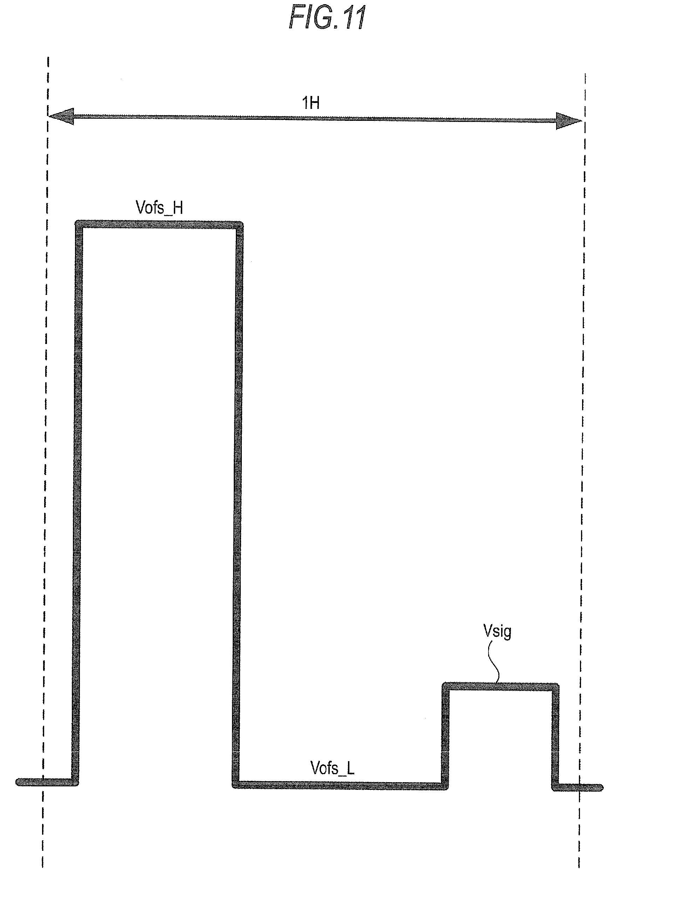

The selector 69 is a circuit device selectively outputting any one of a signal potential Vsig corresponding to the pixel tone, the threshold correction potential Vofs_L and the initialization potential Vofs_H in one horizontal scanning period. Fig. 11 shows an output example of signal line potentials by the selector 69. In the embodiment, the selector 69 outputs potentials in the order of the initialization potential Vofs_H, the threshold correction potential Vofs_L and the signal potential Vsig.

### (c) Configuration of the writing control line drive unit

The writing control line drive unit 37 is a drive device controlling writing of the signal line potentials to the sub-pixels 51 line-sequentially through writing control lines WSL. The writing control lines WSL are arranged so as to extend in the horizontal direction (X direction), and M-pieces of lines are arranged in the vertical direction (Y direction) in the screen).

The writing control line drive unit 37 is a circuit device designating execution timing of an initialization operation, a threshold correction operation, a signal potential writing operation and a mobility correction operation in the unit of horizontal lines. The writing control line drive unit 37 in the case of the embodiment is also operated at the same drive timing when displaying 2D images as well as when displaying 3D images.

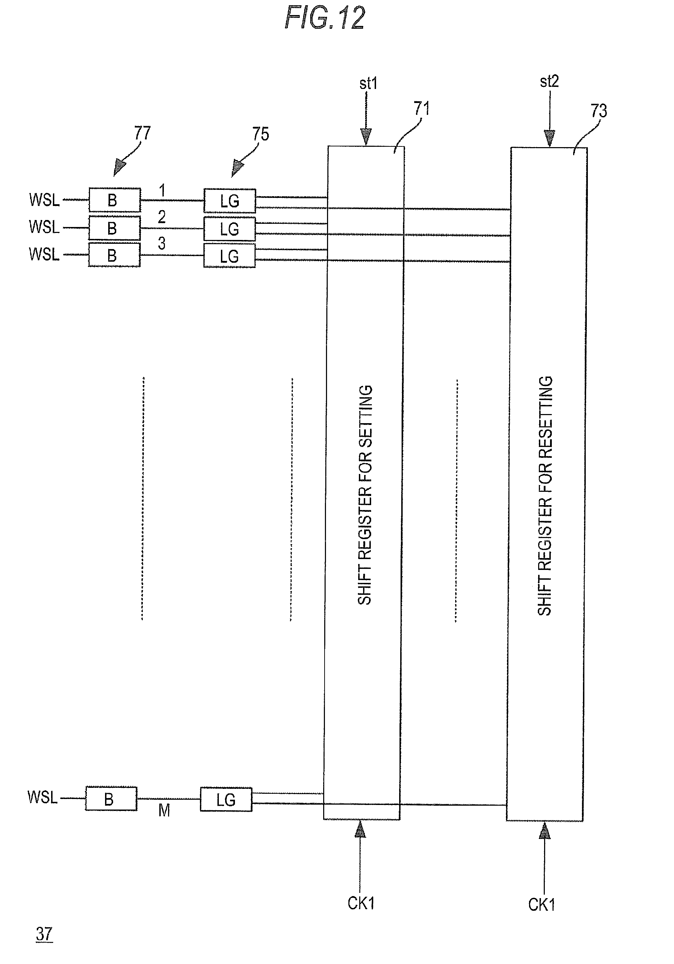

Fig. 12 shows a circuit configuration example of the writing control line drive unit 37. The writing control line drive unit 37 includes a shift register for setting 71, a shift register for resetting 73, logic gates 75 and buffers circuit 77.

The shift register for setting 71 includes M-pieces of delay stages corresponding to vertical resolution. The shift register for setting 71 is operated based on a first shift clock CK1 synchronized with a horizontal scanning clock and transfers a set pulse to a next delay stage every time the first shift clock CK1 is inputted. The timing of starting transfer is given by a start pulse st1.

The shift resister for resetting 73 also includes M-pieces of delay stages corresponding to vertical resolution. The shift register for setting 73 is also operated based on the first shift clock CK1 synchronized with the horizontal scanning clock and transfers a reset pulse to a next delay stage every time the first shift clock CK1 is inputted. The timing of starting transfer is given by a start pulse st2.

The logic gate 75 is a circuit device generating a pulse signal having a pulse width from the input of the set pulse to the input of the reset pulse. The logic gates 75 corresponding to the number of the writing control lines WSL are arranged. When it is necessary to give writing timing of the plural number of times in one horizontal scanning period, it is preferable to calculate a logical-product waveform between a pulse waveform giving writing timing of the plural number of times and a pulse signal prescribed by the set pulse and the reset pulse. In this case, the set pulse and the reset pulse have the function of specifying the horizontal line to which writing timing of the plural number of times is outputted.

The buffer circuit 77 is a circuit device converting the control pulse in a logic level into the control pulse in a drive level. The ability of driving N-pieces of sub-pixels connected to the writing control lines WSL at the same time is necessary for the buffer circuit 77.

### (d) Configuration of the power supply control line drive unit

The power supply control line drive unit 39 is a drive device controlling supply and supply stop of the drive power supply VDD with respect to the sub-pixels 51 through power supply control lines DSL. The power supply control lines DSL are arranged so as to extend in the horizontal direction (X direction) and M-pieces of lines are arranged in the vertical direction (Y direction) of the screen.

The power supply control line drive unit 39 is operated so as to supply the drive power supply VDD during execution periods of the threshold correction operation, the mobility correction and the like in the non-light emitting period. The control operation is executed so as to be synchronized with the writing control operation of the writing control line drive unit 37. Therefore, operations of the power supply control line drive unit 39 are executed based on the first shift clock CK1 which is synchronized with the horizontal scanning clock.

The power supply control line drive unit 39 is operated so as to supply the drive power supply VDD only during periods in which the organic EL devices OLED are controlled to be lighted in the light emitting period. In the case of the embodiment, the control operation during the light emitting period by the power supply control line drive unit 39 is executed at higher scanning speed than scanning speed during non-light emitting period. That is, the operation is executed by using a second shift clock CK2 which is faster than the first shift clock CK1.

As described above, the reason why the scanning speed of the control pulse in the light emitting period is to compress a period length from the lighting start (display start) at the upper end portion of the screen to the lighting end (display end) at the lower end of the screen so as to be shorter than the related-art method. The higher the ratio of the second shift clock CK2 with respect to the first shift clock CK1 becomes, the shorter the length of the light emitting period between the upper portion and the lower portion of the screen becomes.

In the embodiment, the speed of the second shift clock CK2 is set to be 2.77 times as high as the first shift clock CK1 (one horizontal scanning clock).

The power supply control line drive unit 39 in the embodiment is also operated at the same drive timing when displaying 2D images as well as when displaying 3D images.

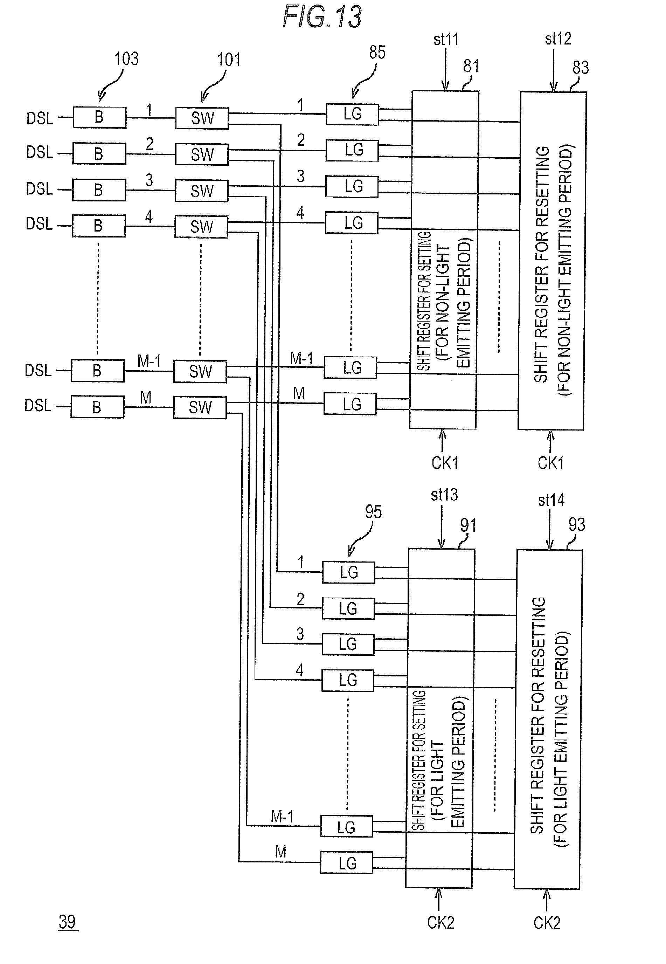

Fig. 13 shows a circuit configuration example of the power supply control line drive unit 39. The power supply control line drive unit 39 includes a circuit stage for the non-light emitting period, a circuit stage for the light emitting period, a circuit stage for selectively outputting control pulses according to these periods and a circuit stage converting the control pulse of the logic level into the control pulse of the drive level.

The circuit stage for the non-light emitting period includes a shift register for setting 81, a shift register for resetting 83 and a logic gate 85.

The shift register for setting 81 includes M-pieces of delay stages corresponding to vertical resolution. The shift register for setting 81 is operated based on the first shift clock CK1 synchronized with the horizontal scanning clock and transfers a set pulse to a next delay stage every time the first shift clock CK1 is inputted. The timing of starting transfer is given by a start pulse st11.

The shift resister for resetting 83 also includes M-pieces of delay stages corresponding to vertical resolution. The shift register for resetting 83 is also operated based on the first shift clock CK1 synchronized with the horizontal scanning clock and transfers a reset pulse to a next delay stage every time the first shift clock CK1 is inputted. The timing of starting transfer is given by a start pulse st12.

The logic gate 85 is a circuit device generating a pulse signal having a pulse width from the input of the set pulse to the input of the reset pulse. The logic gates 85 corresponding to the number of the power supply control lines DSL are arranged.

When an edge of the pulse signal is desired to be set in the middle of the one horizontal scanning period, it is preferable to calculate a logical-product waveform between a pulse waveform giving timing of the edge and a pulse signal generated by the set pulse and the reset pulse.

Similarly, the circuit stage for the light emitting period includes a shift register for setting 91, a shift register for resetting 93 and a logic gate 95.

The shift register for setting 91 includes M-pieces of delay stages corresponding to vertical resolution. The shift register for setting 91 is operated based on the second shift clock CK2 higher than the horizontal scanning clock and transfers a set pulse to a next delay stage every time the second shift clock CK2 is inputted. The timing of starting transfer is given by a start pulse st13.

The shift resister for resetting 93 also includes M-pieces of delay stages corresponding to vertical resolution. The shift register for resetting 93 is also operated based on the second shift clock CK2 higher than the horizontal scanning clock and transfers a reset pulse to a next delay stage every time the second shift clock CK2 is inputted. The timing of starting transfer is given by a start pulse st14.

The logic gate 95 is a circuit device generating a pulse signal having a pulse width from the input of the set pulse to the input of the reset pulse. The logic gates 95 corresponding to the number of the power supply control lines DSL are arranged.

When the edge of the pulse signal is desired to be set in the middle of the one horizontal scanning period, it is preferable to calculate a logical-product waveform between a pulse waveform giving timing of the edge and a pulse signal generated by the set pulse and the reset pulse.

The switching of pulse signals from the circuit units provided for these two processing periods is executed by a switch circuit 101. The switch circuit 101 selects the pulse signal inputted from the logic gate 85 during the non-light emitting period and selects the pulse signal inputted from the logic circuit 95 during the light emitting period. The switching of selection of pulse signals is realized by a not-shown switching signal. The pulse signal of the logic gate 95 can be also used as the switching signal.

That is, a method of interlocking the switching of pulse signals with the switching the logic level of the logic gate 95 is applied. Naturally, when the pulse signal inputted from the logic gate 95 is switched to an H-level, the pulse signal is selected, and when the signal is switched to an L-level, the pulse signal inputted from the logic gate 85 is selected.

A buffer circuit 103 is disposed in a subsequent stage of the switch circuit 101. The buffer circuit 103 is a circuit device converting the power supply control signal in the logic level into the power supply control signal in the drive level. The ability of driving N-pieces of sub-pixels connected to the power supply control line DSL at the same time is necessary for the buffer circuit 103.

### (e) Configuration of the timing generator 41

The timing generator 41 is a circuit device generating timing control signals and clocks necessary for driving the organic EL panel module 31. The timing generator 41 generates, for example, the clock signal CK, the first shift clock CK1, the second shift clock CK2, start pulses st1, st2, st11, st12, st13, st14 and the like.

### (B-2) Drive operation

### (a) Outline of a display schedule

Hereinafter, a display schedule of the organic EL panel module 31 according to the embodiment will be explained. In the case of the embodiment, explanation will be made on the assumption that an image stream imaged at 60 frames per second is given to the organic EL panel module 31. That is, the case in which the image stream for 2D images and the image stream for 3D images are imaged or generated at 60 frames per second is assumed.

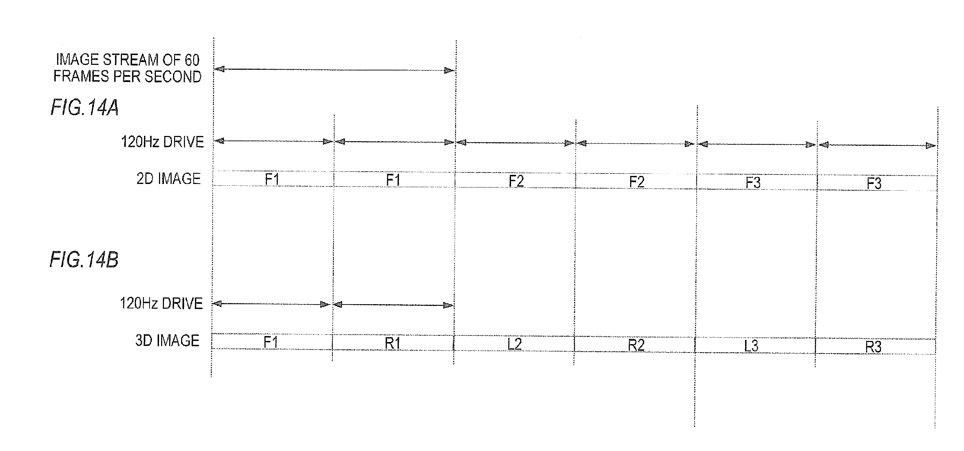

Figs. 14A and 14B show a display schedule of an image stream assumed in the embodiment. As shown in Figs. 14A and 14B, a drive method in which the display is performed at 120 frames per second is applied regardless of the difference of types of the image stream to be inputted. That is, the drive method of displaying 2 frames during 1/60 seconds.

Fig. 14A shows a display schedule of 2D images. In the case of 2D image, frame images having the same image contents are displayed in the front half period and the last half period in the display period given in the unit of 1/60 seconds. That is, each frame image will be displayed twice such as F1, F1, F2, F2, F3, F3, F4, F4.... It is also preferable that an image obtained by performing motion compensation to the input image is inserted in the last half period in the display period. The image to which the motion compensation has been performed is inserted, thereby increasing display quality of moving images. The display corresponds to a so-called double speed display technique.

Fig. 14B shows a display schedule of 3D images. In the case of 3D images, a left-eye image L is displayed in the front half period and a right-eye image R is displayed in the last half period in the display period in the unit of 1/60 seconds. That is, images for the left eye and images for the right eye are alternately displayed such as L1, R1, L2, R2, L3, R3, L4, R4....

### (b) Outline of drive timing

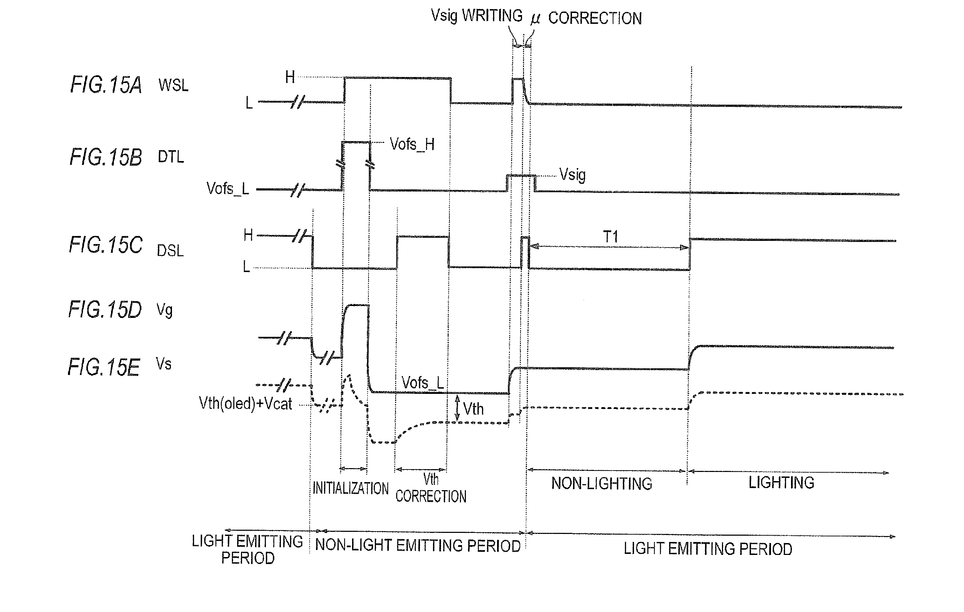

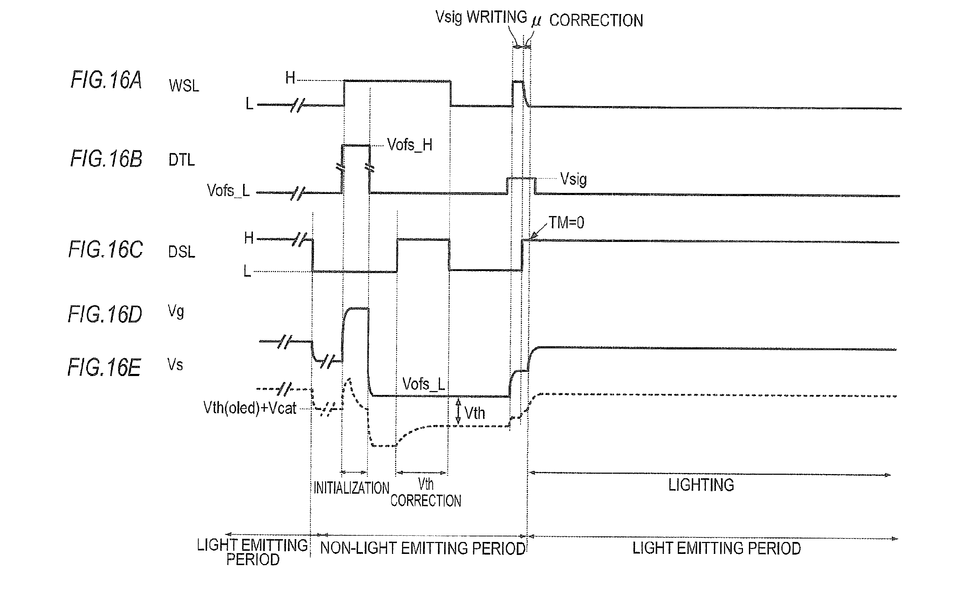

Figs. 15A to 15E and Figs. 16A to 16E show the relationship between drive signal waveforms and potential changes of the drive transistors N2 when focusing on the sub-pixels 51 on certain horizontal lines included in the pixel array unit 33. Figs. 15A to 15E correspond to operations of the horizontal line positioned at the first row and Figs. 16A to 16E correspond to operations of the horizontal line positioned at the last row. The difference between two operations is in the lengths of waiting times T1 and TM to the light emitting period, which appear after the end of the non-light emitting period as described later.

Here, Fig. 15A and Fig. 16A are drive waveforms of the writing control line WSL corresponding to the focused sub-pixels 51.

Fig. 15B and Fig. 16B are drive waveforms of the signal lines DTL. Fig. 15C and Fig. 16C are drive waveforms of the corresponding power supply control lines DSL. Fig. 15D and Fig. 16D are waveforms of gate potentials Vg of the drive transistors N2. Fig. 15E and Fig. 16E are waveforms of source potentials Vs of the drive transistors N2.

As shown in Figs. 15A to 15E and Figs. 16A to 16E, drive operations of the organic EL panel module 31 can be separated to drive operations during the non-light emitting period and drive operations during the light emitting period.

In the non-light emitting period, the initialization operation, the operation of writing signal potentials Vsig to the sub-pixels 51 and the operation of correcting characteristic variation of the drive transistors N2 (the threshold correction operation and the mobility correction operation) are executed.

In the light emitting period, the operation of lighting the organic EL devices OLED and the operation of stopping the lighting temporarily (namely, a light-out operation) are executed based on the signal potential Vsig written during the non-light emitting period. In the case of the embodiment, the timing and the period length in which the light-out operation is executed is set so as to be different according to each horizontal line. The reason is that it is necessary to absorb the difference between scanning speed of the pulse signal giving the lighting time and scanning speed of the control pulse giving the control timing of the non-light emitting period.

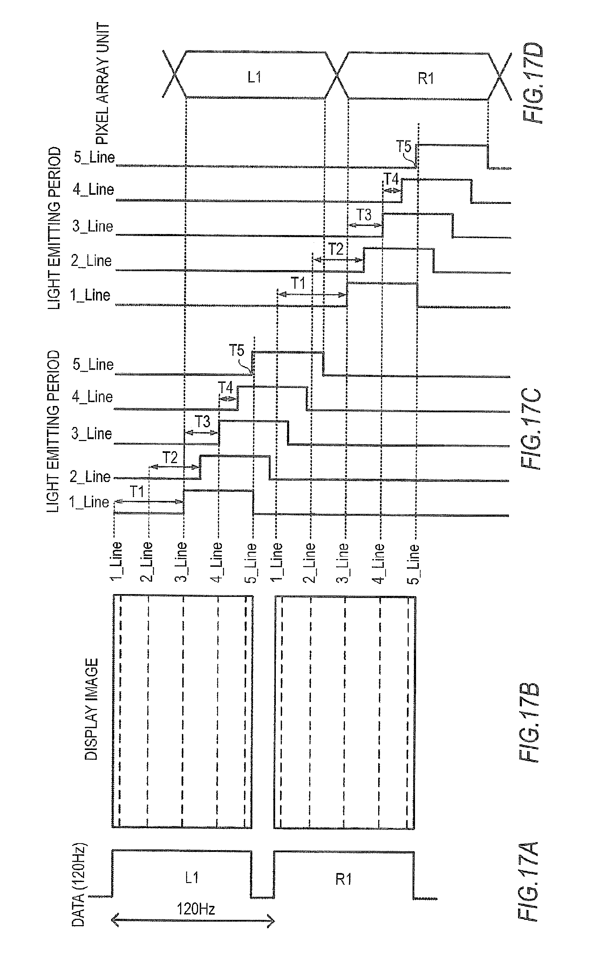

Figs. 17A to 17D show the relationship between the waiting time provided for the speed adjustment and the horizontal lines. Figs. 17A to 17D show a case in which the number of horizontal lines is 5 so that the correspondence will be well defined. Fig. 17A shows the input timing of the left-eye image L and the right-eye image R. Fig. 17B shows the correspondence between input image data and the horizontal lines. Positions of broken lines correspond to horizontal lines 1 to 5.

Fig. 17C shows the relationship among waiting times T1 to T5 from the end of the non-light emitting period to the start of the light emitting period corresponding to respective horizontal lines. As shown from the drawing, the waiting time T1 of the horizontal line 1 in which the lighting period starts first is the longest and the waiting time T5 of the horizontal line 5 in which the lighting period starts last is the shortest (including 0 (zero)) from the relation of the non-light emitting period. The waiting times T2, T3 and T4 obtained by equally dividing the difference between T1 and T5 are assigned to the horizontal lines 2, 3 and 4.

The reason why the waiting time T can be fixed freely is that the start timing of lighting the organic EL panel module and the length of the lighting period can be set freely by the control of the power supply control lines DSL.

Fig. 17D shows the display timing of the left-eye image L and the right-eye image R. As shown in the drawing, display periods of the left-eye image L and the right-eye image R do not overlap. Additionally, there exists unoccupied time between respective display periods. Therefore, if open/close of the liquid crystal shutters can be switched during the unoccupied time, necessary images for right and left eyes can be inputted.

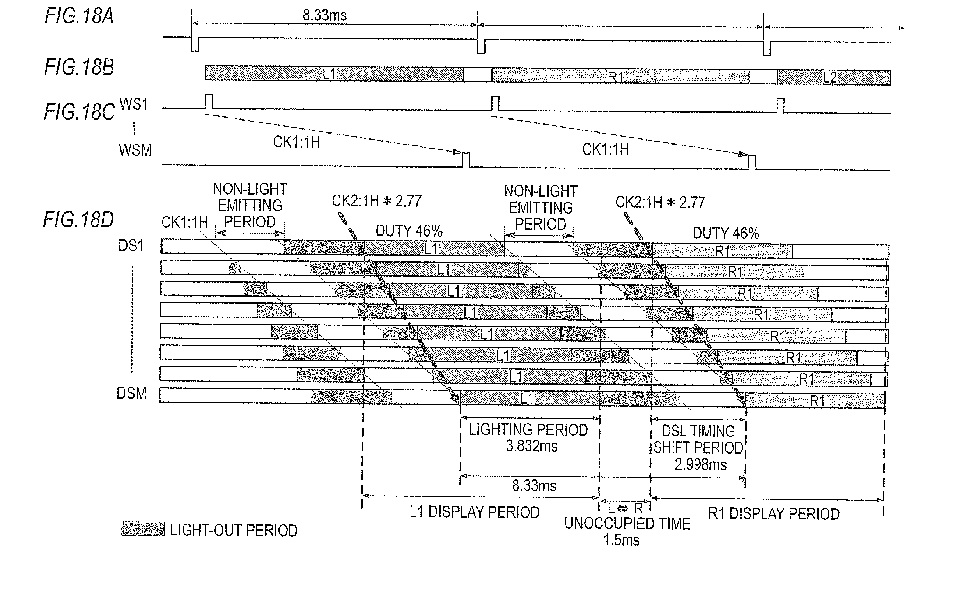

Figs. 18A to 18D show the relationship of the above drive timings as specific numeral examples. Fig. 18A is a waveform diagram of a vertical synchronization pulse giving one frame period. In the case of the embodiment, the vertical synchronization pulse is given so as to display 120 frames per second. Accordingly, in the case of the embodiment, the period length from the vertical synchronization pulse to the vertical synchronization pulse (one frame length) is given at 8.33 ms.

Fig. 18B is a diagram showing an image stream. In the drawing, a left-eye image L1 and a right-eye image R1 included in a first frame, and part of a left-eye image L2 included in a second frame are shown. As shown in the drawing, each frame image is inputted between the vertical synchronization pulse and the vertical synchronization pulse.

Fig. 18C is a diagram showing the scanning operation of the control pulse driving the writing control line WSL. As shown in the drawing, the control pulse is shift-driven line-sequentially based on the first shift clock CK1. In the case of the embodiment, for example, the horizontal scanning clock is used as the first shift clock CK1.

Fig. 18D is a diagram for explaining arrangement relationship of non-light emitting periods as well as lighting periods and light-out periods during the light emitting period of respective horizontal lines. In the drawing, sections shown by white bars are non-light emitting periods. Also in the drawing, filled-in sections are light-out periods. Periods with hatching are lighting periods. As shown in the drawing, the light-out periods are arranged previous and subsequent to the lighting period. In this case, the length of the light-out period provided previous to the lighting period corresponds to the above-described waiting time T.

As shown in Fig. 18D, in the waiting times T of respective horizontal lines, the waiting time T1 of the horizontal line 1 which is the first row is the longest, and the waiting time TM of the horizontal line M which is the last row is the shortest. On the other side, in the light-out periods provided subsequent to the lighting periods, the light-out period of the horizontal line 1 which is the first row is the shortest and the light-out period of the horizontal line M which is the last row is the longest. The reason why the light-out periods are arranged previous and subsequent to the light-out periods is to set the lengths of lighting periods of respective horizontal lines to be the same. That is, the arrangement is to prevent generation of luminance difference among the horizontal lines.

In the case of Fig. 18D, the scanning speed of the lighting period (namely, the second shift clock CK2) is 2.77 times as high as the first shift clock CK1. The relation can be seen also from the fact that the slope of bold broken-line arrows indicating the slope of the lighting periods is steeper than the slope of boundaries of the non-light emitting periods shown by white bars. The relation has an advantage of compressing the display period of the frame image (period from the lighting start of the first row to the lighting end of the last row). In the case of the embodiment, the length of the lighting period of each horizontal line is 46% of one frame period, namely, 3.832 ms.

The unoccupied time of 1.5 ms is secured between the display period of the left-eye image L1 and the right-eye image R1. Concerning the unoccupied time, it is sufficient that at least a period of time necessary for open/close control of liquid crystal shutters is secured. Therefore, the length of the lighting period and the scanning speed (second shift clock CK2) can be controlled freely as long as the minimum necessary unoccupied time can be secured.

### (c) Details of drive operations

Hereinafter, drive states in the sub-pixel will be explained in detail. The drive timing and the change of potential states of the drive transistor N2 will be explained with reference to the above Figs. 15A to 15E and Figs. 16A to 16E.

### (c-1) Lighting operation in the light emitting period

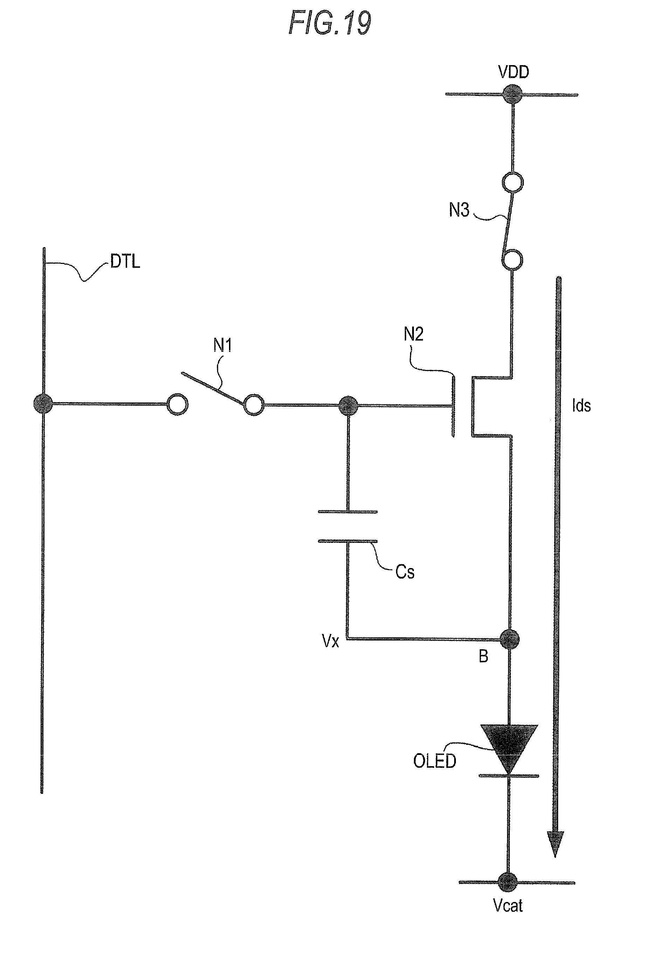

Fig. 19 shows an operation state of the sub-pixel in the light emitting period. At this time, the writing control line WSL is in the L-level and the sampling transistor N1 is controlled to be in an off-state. Accordingly, a gate electrode of the drive transistor N2 is controlled to be in a floating state.

On the other hand, the power supply control line DSL is in the H-level and the power supply control transistor N3 is controlled to be in an on-state. Accordingly, the drive transistor N2 is controlled to be operated in a saturated state. That is, the drive transistor N2 operates as a constant current source supplying drive current corresponding to voltage stored in the storage capacitor Cs to the organic EL device OLED. In this manner, the organic EL device OLED emits light with luminance in accordance with pixel tones. The operation is performed with respect to all sub-pixels 51 during the light emitting period.

### (c-2) Light-out operation in the non-light emitting period

When the light-emitting period ends, the non-light emitting period starts. In the non-light emitting period, an operation of turning off the organic EL device OLED is executed.

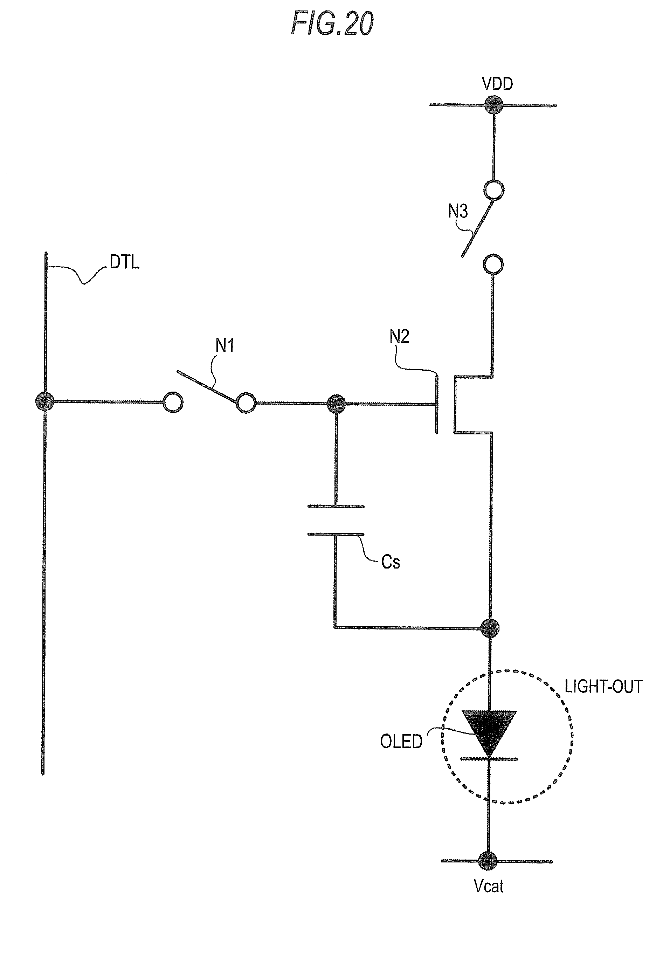

Fig. 20 shows an operation state of the sub-pixel at the time of the light-out operation. In the light-out operation, the power supply control line DSL is switched to the L-level and the power supply control transistor N3 is controlled to be in the off-state. The off-state of the sampling transistor N1 is maintained.

According to the operation, the supply of drive current to the organic EL device OLED is stopped. The organic EL device OLED which is the current-driven device is turned off according to the operation. At the same time, the voltage between both electrodes of the organic EL device OLED is reduced to the threshold voltage Vth (oled). Accordingly, the source potential Vs of the drive transistor N2 is reduced to a potential obtained by adding a cathode potential Vcat to the threshold voltage Vth (oled). The gate potential Vg of the drive transistor N2 is also reduced along with the reduction of the source potential. The tone information of the previous frame is still stored in the storage capacitor Cs at this point.

### (c-3) Initialization operation in the non-light emitting period

Next, the initialization operation initializing the tone information of the previous frame is executed.

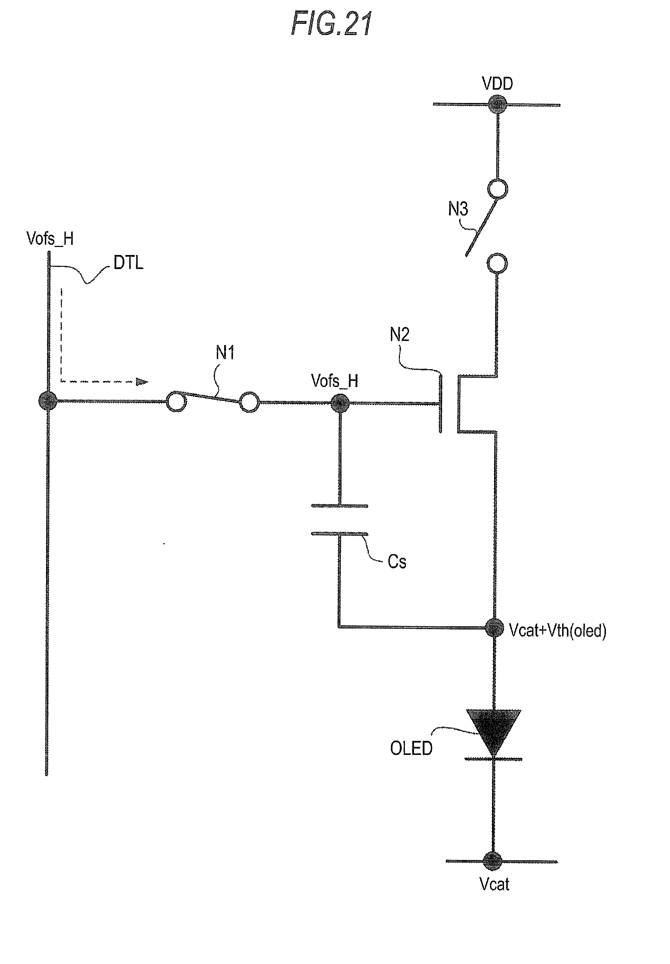

Fig. 21 shows an operation state in the sub-pixel at the time of initialization operation. When the initialization timing comes, the writing control line WSL is controlled to be in the H-level and the sampling transistor N1 is switched to be in the on-state. The initialization potential Vofs_H is applied to the signal line DTL in synchronization with the on-operation of the sampling transistor N1. Accordingly, the initialization potential Vofs_H is written to the gate potential Vg of the drive transistor N2 (Fig. 15D, Fig. 16D).

The source potential Vs of the drive transistor N2 is increased along with the increase of the gate potential Vg (Fig. 15E, Fig. 16E). That is, the source potential Vs is increased to be higher than the potential obtained by adding the cathode potential Vcat to the threshold voltage Vth (oled). Accordingly, the organic EL device OLED becomes in the on-state. However, the power supply control transistor N3 maintains the off-state, therefore, the organic EL device OLED operates so as to take electric charges from the source electrode of the drive transistor N2. Then, the source potential Vs of the drive transistor N2 is transferred to Vcat+Vth (oled) again.

As a result, voltage given by the difference between "Vofs_H" and "Vcat+Vth (oled)" (namely, the initialization voltage) is written in the storage capacitor Cs. The operation is called the initialization operation.

Though the organic EL device OLED is in a state of emitting light for a moment as described above in the process of the initialization operation, the light emission is performed with low luminance as well as the light emitting period is extremely short, therefore, the emission does not affect the image quality.

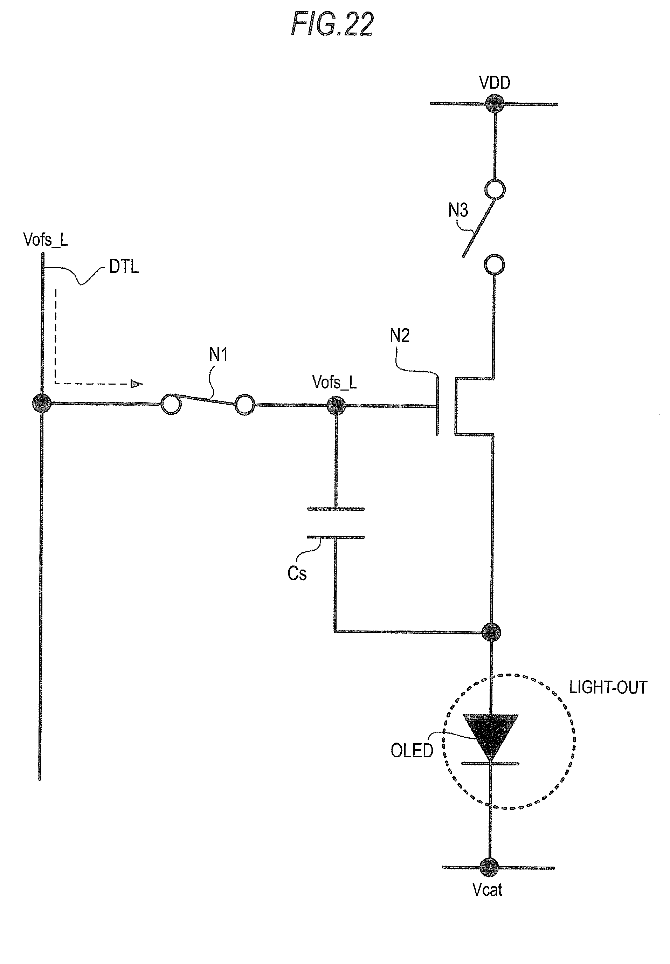

When the initialization voltage is written in the storage capacitor Cs, the potential of the signal line DTL is switched to the threshold correction potential Vofs_L from the initialization potential Vofs_H. Fig. 22 shows an operation state in the sub-pixel at this point. At this time, the sampling transistor N1 maintains the on-state. Accordingly, the gate potential Vg of the drive transistor Ns is reduced to the threshold correction potential Vofs_L from the initialization potential Vofs_H (Fig. 15D, Fig. 16D).

The source potential Vs of the drive transistor N2 is also reduced in conjunction with the potential change of the gate potential Vg (Fig. 15E, Fig. 16E). This is because the initialization voltage has been stored in the storage capacitor Cs. However, the stored voltage of the storage capacitor Cs is slightly compressed from the initialization voltage. The stored voltage of the storage capacitor Cs at the end of the initialization is sufficiently higher than the threshold voltage Vth of the drive transistor N2. According to the above operations, preparation for correcting variation of the threshold voltage Vth of the drive transistor N2 is completed.

### (c-4) Threshold correction operation in the non-light emitting period

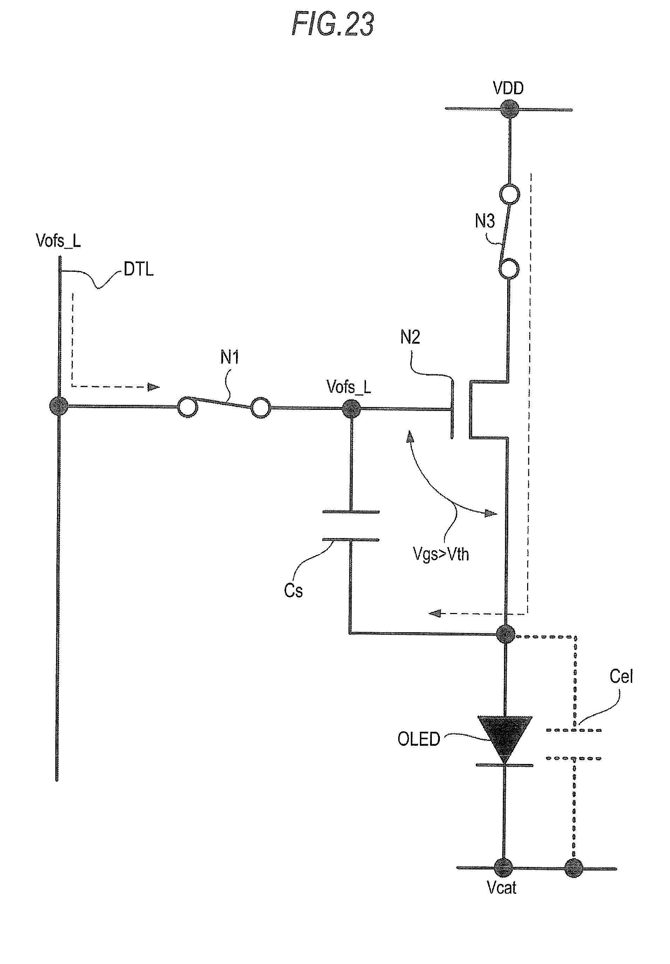

Next, a threshold correction operation is started. Fig. 23 shows an operation state in the sub-pixel at the time of the threshold correction operation. The threshold correction operation is started when the power supply control line DSL is controlled to be in the H-level and the power supply control transistor N3 is controlled to be turned on.

At the start point, a voltage between gate/source Vgs of the drive transistor N2 is wider than the threshold voltage Vth even when considering variation. Therefore, the drive transistor N2 is also switched to the on-state when the power control transistor N3 is turned on.

According to the above operation, electric current begins to flow so as to charge capacitive components parasitic to the storage capacitor Cs and the organic EL device OLED through the drive transistor N2.

The source potential Vs of the drive transistor N2 is gradually increased along with the charging operation. The gate potential Vg of the drive transistor N2 is fixed to the threshold correction potential Vofs_L. Therefore, the voltage between gate/source Vgs of the drive transistor N2 is gradually narrowed from the initialization voltage while the power supply control transistor N3 is controlled to be in the on-state (Figs. 15D, 15E and Figs. 16D, 16E).

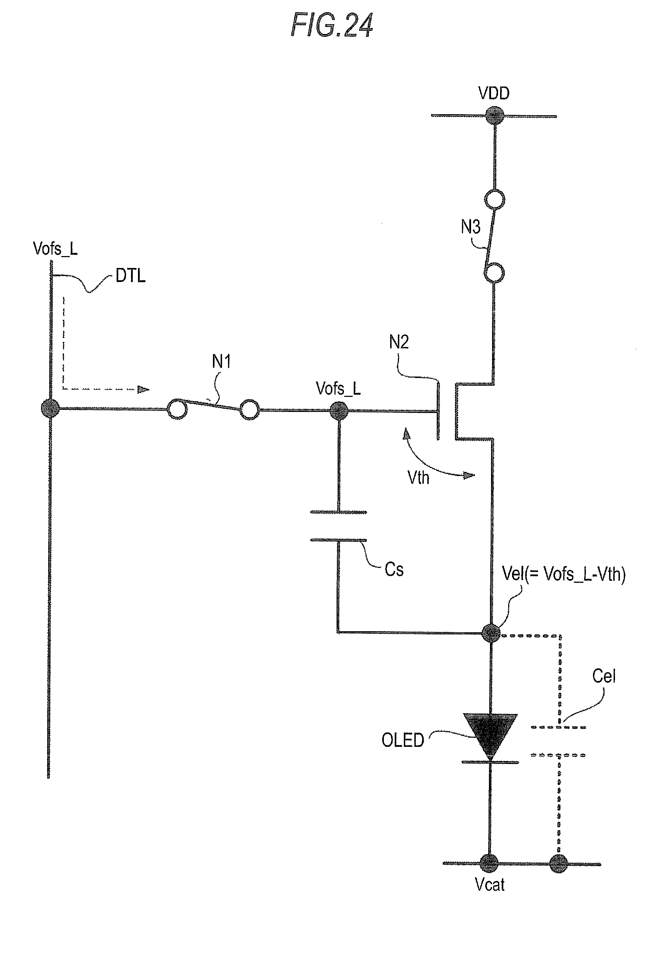

Then, when the voltage between gate/source Vgs of the drive transistor N2 reaches the threshold voltage Vth, the drive transistor N2 performs cut-off operation automatically. Fig. 24 shows an operation state in the sub-pixel when the drive transistor N2 is automatically cut off. At this time, writing of the threshold correction potential Vofs_L with respect to the gate electrode of the drive transistor N2 is continued. The source potential Vs of the drive transistor N2 is given by Vofs_L-Vth. According to the operation, the threshold correction operation is completed.

"Vofs_L-Vth" is fixed to be a potential lower than "Vcat+Vth (oled)". Therefore, the organic EL device OLED maintains the light-out state also at this point.

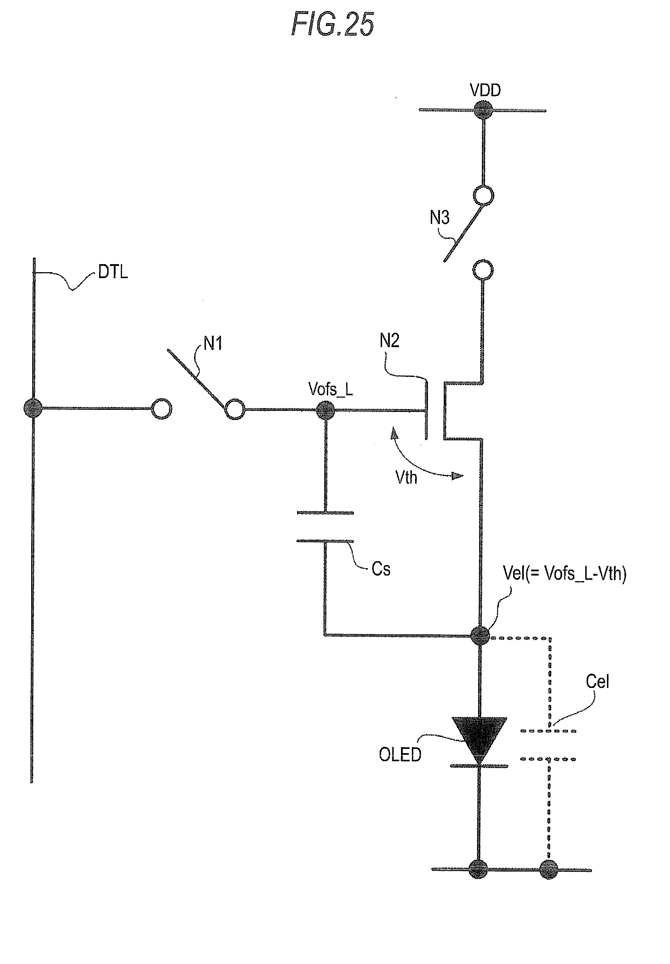

When the threshold correction operation is completed, the sampling transistor N1 and the power supply control transistor N3 are controlled to be off at the same time as shown in Fig. 25. At this time, the drive transistor N2 and the organic EL device OLED are both in the off-state.

Here, when effect by off-current is ignored, the gate potential Vg and the source potential Vs of the drive transistor N2 maintain the stored state of the potential state at a point when the threshold correction operation has been completed.

### (c-5) Writing operation of the signal potential in the non-light emitting period

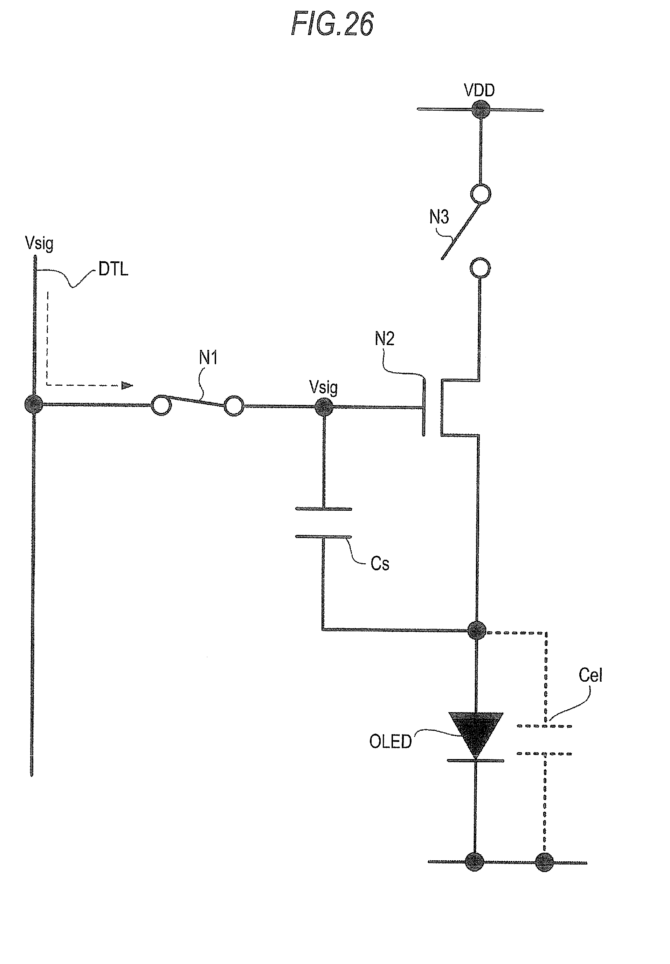

Next, the writing operation of the signal potential Vsig is started. Fig. 26 shows an operation state in the sub-pixel when the writing operation of the signal potential Vsig is executed. In the case of the embodiment, the operation is started by controlling the sampling transistor N1 to be turned on in a state in which the power supply control transistor N3 is controlled to be off.

Before the sampling transistor N1 is switched to the on-state, the potential of the signal line DTL is switched to the signal potential Vsig (Figs. 15A to 15C and Figs. 16A to 16C).

With the starting of the operation, the gate potential Vg of the drive transistor N2 is increased to the signal potential Vsig (Fig. 15D, Fig. 16D). That is, the signal potential Vsig is written in the storage capacitor Cs. The source potential Vs of the drive transistor N2 is slightly increased along with the increase of the gate potential Vg (Fig. 15E, Fig. 16E).

When the signal potential Vsig is written in the above manner, the voltage between gate/source Vgs of the drive transistor N2 is expanded as compared with the threshold voltage Vth to turn on the drive transistor N2. However, drive current does not flow through the drive transistor N2 because the power supply control transistor N3 is in the off-state. Accordingly, the light-out state of the organic EL device OLED is maintained.

### (c-4) Mobility operation in the non-light emitting period

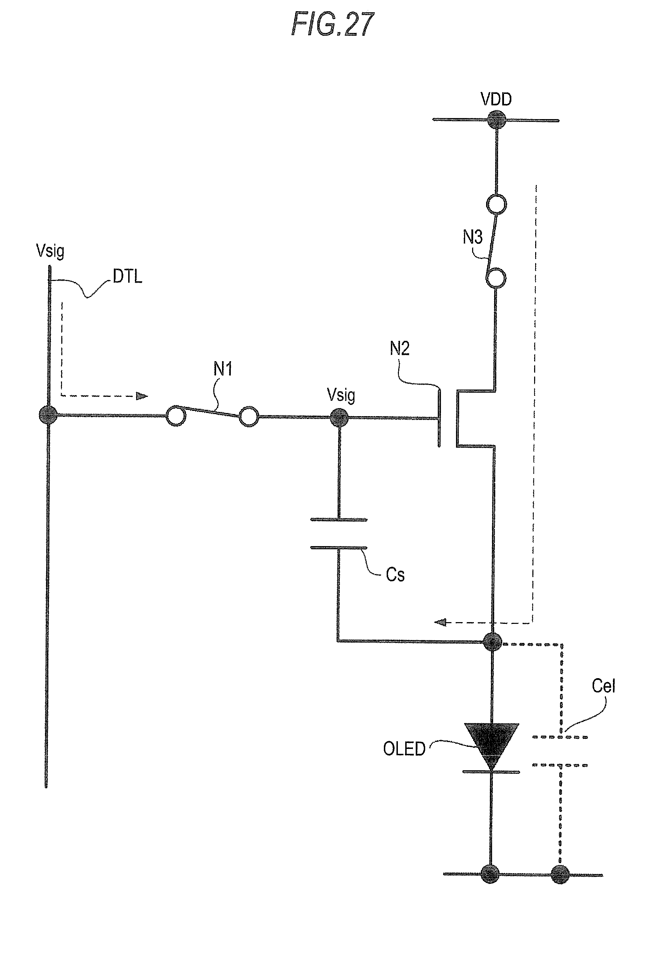

When the writing of the signal potential Vsig is completed, an operation of correcting variation of mobility µ of the drive transistor N2 is started. Fig. 27 shows an operation state in the sub-pixel at the time of the operation. The operation is started by controlling the power supply control transistor N3 to be turned on.

When the power supply control transistor N3 is controlled to be on, drive current having magnitude corresponding to the voltage between gate/source Vgs begins to flow through the drive transistor N2. The drive current flows so as to charge parasitic capacitance of the storage capacitor Cs and the organic EL device OLED. That is, the source potential Vs of the drive transistor N2 is increased. The light-out state of the organic EL device OLED is maintained until the source potential Vs exceeds the threshold voltage Vth (oled) of the organic EL element OLED.

The drive current flowing the mobility correction period has characteristics that the current is increased as the mobility µ of the drive transistor N2 is increased and the current is reduced as the mobility µ of the drive transistor N2 is reduced when the voltage between gate/source Vgs is the same. As a result, the voltage between gate/source Vgs is reduced as the mobility µ of the drive transistor N2 is increased.

As a result of the correction operation, drive current of the same magnitude is supplied to the organic EL devices OLED by using the drive transistors N2 having the same pixel tone regardless of the difference of the mobility µ. That is, light emitting luminance of the sub-pixels 51 is corrected to be the same when the pixel tone is the same regardless of the difference of the mobility µ.

In Fig. 15A and Fig. 16A, the waveform of the control pulse of the writing control line WSL used at the time of correcting the mobility µ is changed to be nonlinear. This is for preventing overs and shorts in the correction amount in accordance with the pixel tone level.

When the on-state of the power supply control transistor N3 continues after the completion of the mobility correction operation, the source potential Vs of the drive transistor N2 is increased to excess the threshold voltage Vth (oled) of the organic EL device OLED and lighting of the organic EL device OLED is started.

However, in the case of the embodiment, the scanning speed of the control pulse giving the lighting period is set to be higher than the scanning speed of the control pulse giving the drive timing of the non-light emitting period. Therefore, it is necessary to delay the start point of lighting for the waiting time T which has been fixed according to each horizontal line.

Accordingly, the power supply control transistor N3 is controlled to be off until the waiting time T concerning the corresponding horizontal line passes in the case of the embodiment (Fig. 15C and Fig. 16C).

Figs. 16A to 16C show drive waveforms of the horizontal line corresponding to the last row (Mth row) and the waiting time TM is set to be 0 (zero), therefore, the lighting period is started immediately after the mobility correction state.

### (c-7) Waiting time operation in the light emitting period

As described above, all operations in the non-light emitting period have been completed, an operation for the light emitting period is started. As described above, at the point that the non-light emitting period has been completed, necessary processing for lighting the organic EL device OLED has been already completed. However, clock speed of the second shift clock CK2 used in the light-emitting period is higher than clock speed of the first shift clock CK1 used in the non-light emitting period as described above.

Therefore, it is necessary to allow the waiting time T to the lighting of the organic EL device OLED to be longer as the horizontal line comes closer to the head row as shown in Fig. 18D.

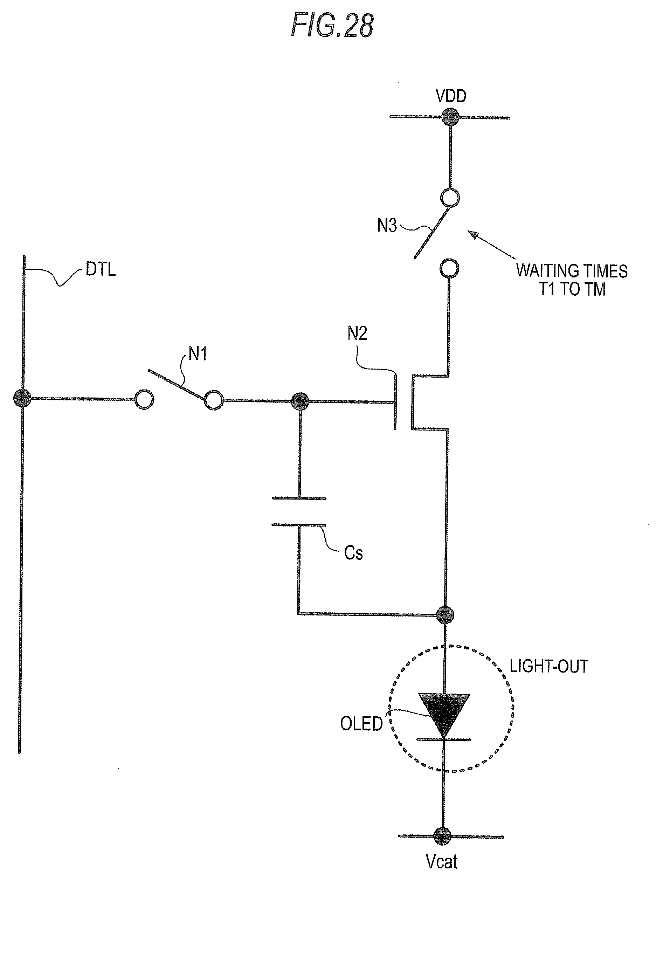

Fig. 28 shows an operation state in the sub-pixel in the waiting time T. As shown in Fig. 28, the power supply control transistor N3 is controlled to be in the off-state for the waiting time T fixed according to each horizontal line. Naturally, the horizontal line is displayed in black during the waiting time.

### (c-8) Lighting operation in the light-emitting period

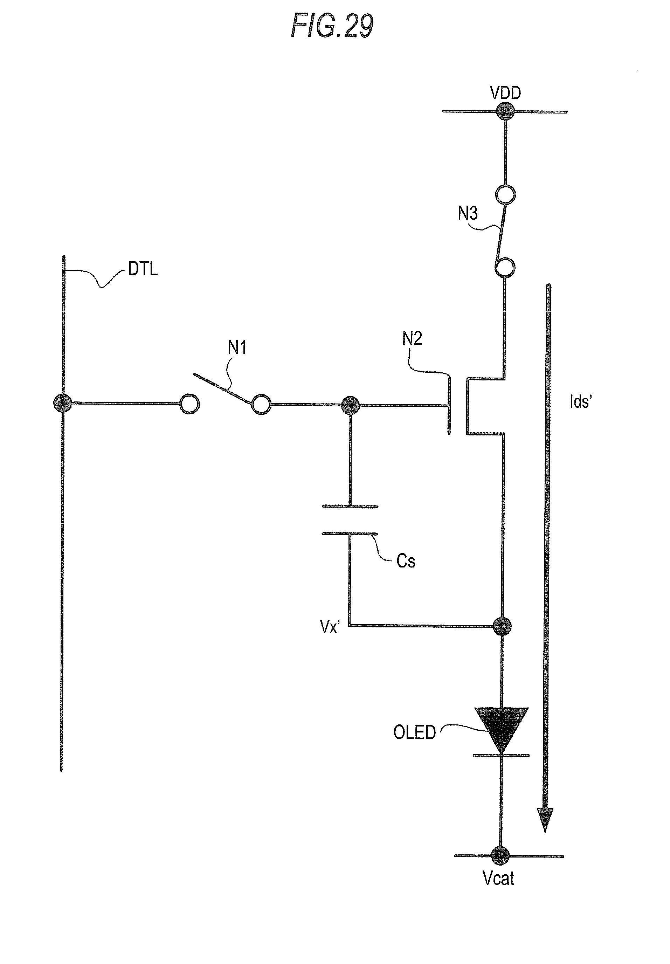

When the waiting time T set to each horizontal line passes, the power supply control transistor N3 is switched to the on-state and the lighting operation of the organic EL device OLED is started as shown in Fig. 29.

### (B-3) Brief

As described above, a drive frequency necessary for displaying 3D images can be reduced to the half of the related-art frequency by applying the drive method according to Embodiment 1. Specifically, 3D images taken or generated at 60 frames per second can be displayed on the screen at 120 frames per second.

When the drive frequency is reduced, an operational margin of the pixel array unit 33 can be increased. Accordingly, manufacturing costs of the pixel array unit 33 can be reduced. Additionally, operation speed of the timing generator and drive circuits (for example, the shift register) can be also reduced by reducing the drive frequency. From the above viewpoints, it is possible to reduce manufacturing costs of the organic EL penel module.

Also in the embodiment, it is not necessary to prepare drive circuits for 2D images and drive circuits for 3D images separately. That is, in the drive method according to the embodiment, it is not necessary to discriminate between 2D images and 3D images, and these images can be displayed at single drive timing. Accordingly, the layout area of drive circuits can be reduced as compared with the related-art example. Also in the embodiment, a circuit for determining the type of images is not necessary. Also from these viewpoints, the invention can contribute to cost reduction of the organic EL panel module.

Also in the embodiment, it is not necessary to write an all-black screen by each frame. Therefore, the length of the lighting period in the embodiment can be set to be longer than the related-art example by the all-black screens. That is, brightness of the screen can be maintained also at the time of displaying 3D images by applying the drive technique according to the embodiment.

### (B-4) Modification example of Exemplary Embodiment 1

### (a) Other setting examples of shift clocks

In the above Embodiment 1, the case in which the clock speed in the second shift clock CK2 is set to be 2.77 times as high as the clock speed of the first shift clock CK1 has been explained.

However, the ratio of the clock speed between the first shift clock CK1 and the second shift clock CK2 is not limited to this.

### (b) Rate of the light-emitting period occupied in one frame

In the above Embodiment, the case in which the rate of the light-emitting period is 46% in one frame has been explained.

However, the light emitting period may apply other rates. Naturally, as the rate of the light-emitting period is increased, the screen luminance can be also increased even when the drive voltage VDD is the same.

### (c) Waiting time

In the above embodiment, the case in which the waiting time TM of the horizontal line whose writing operation of the signal potential Vsig is completed last is set to 0 (zero) has been explained.

However, it is not always necessary to set the waiting time TM to be 0 (zero).

### (C) Embodiment 2

### (C-1) System configuration example

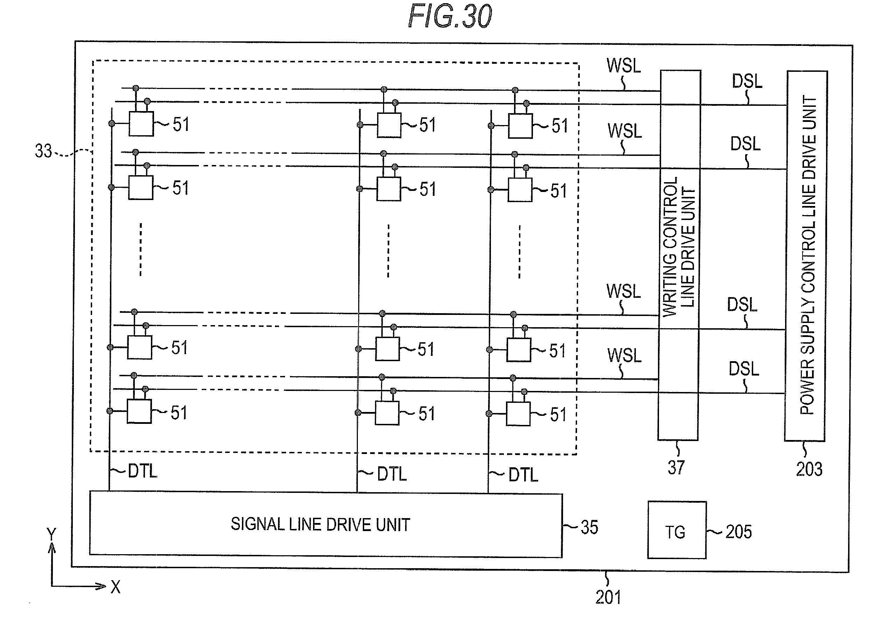

Fig. 30 shows a system configuration example of an organic EL panel module 201 according to the embodiment. In Fig. 30, the same numerals and signs are given to portions corresponding to Fig. 7.

The organic EL panel module 201 shown in Fig. 30 includes the pixel array unit 33 and drive circuits thereof, which are the signal line drive unit 35, the writing control line drive unit 37, a power supply control line drive unit 203 and a timing generator 205.

Only the power supply control line drive unit 203 and the timing generator 205 which are new components will be explained as follows.

### (a) Configuration of the power supply control line drive unit

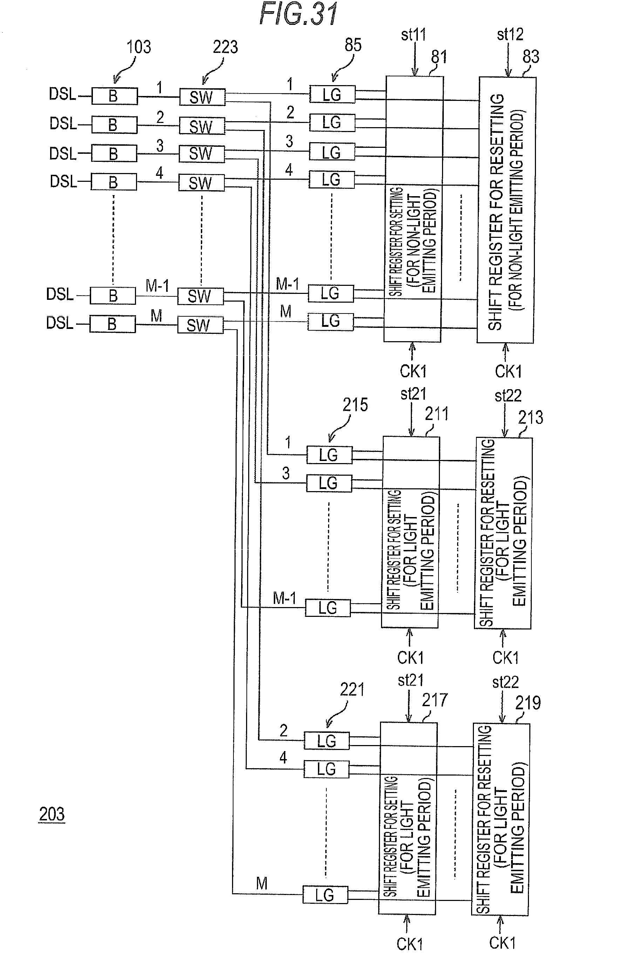

Fig. 31 shows a circuit configuration example of the power supply control line drive unit 203. In Fig. 31, the same numerals and signs are given to portions corresponding to Fig. 13.

The power supply control line drive unit 203 includes a circuit stage for a non-light emitting period, a circuit stage for a light emitting period, a circuit stage selectively outputting control pulses according to these periods and a circuit stage converting the control pulse of the logic level into the control pulse of the drive level. Among them, the circuit stage for the non-light emitting period and the circuit stage converting the control pulse into the control pulse in the drive level have the same configuration as the power supply control line drive unit 39 of Fig. 13. The circuit stage for the light-emitting period and the circuit configuration selectively outputting the control pulses according to periods have different configurations as the power supply control line drive unit 39. Only the circuit stage for the light-emitting period and the circuit stage selectively outputting the control pulses according to the periods which are new components will be explained as follows.

The circuit stage for the light emitting period is further divided into a circuit portion for lines positioned at odd-numbered lines in the horizontal lines (referred to as "odd-numbered lines" in the following description) and a circuit portion for lines positioned at even-numbered lines(referred to as "even-numbered lines" in the following description). Hereinafter, the case in which the number of the horizontal lines is an even number and the number of odd-numbered lines corresponds to the number of even-numbered lines will be explained.

The circuit portion for odd-numbered lines in the circuit stage for the light-emitting period includes a shift register for setting 211, a shift register for resetting 213 and a logic gate 215.

The shift register for setting 211 includes M/2 pieces of delay stages corresponding to the half of vertical resolution (the number of odd-numbered lines). The shift register for setting 211 is operated based on the first shift clock CK1 synchronized with the horizontal scanning clock and transfers a set pulse to the next delay stage every time the first shift clock CK1 is inputted. The timing of starting transfer is given by a start pulse st21.

The shift resister for resetting 213 also includes M/2 pieces of delay stages corresponding to the half of vertical resolution (the number of odd-numbered lines). The shift register for resetting 213 is also operated based on the first shift clock CK1 synchronized with the horizontal scanning clock and transfers a reset pulse to the next delay stage every time the first shift clock CK1 is inputted. The timing of starting transfer is given by a start pulse st22.

The logic gate 215 is a circuit device generating a pulse signal having a pulse width from the input of the set pulse to the input of the reset pulse. The logic gates 215 corresponding to the number of the power supply control lines DSL for odd-numbered lines are arranged.

When the edge of the pulse signal is desired to be set in the middle of the one horizontal scanning period, it is preferable to calculate a logical-product waveform between a pulse waveform giving timing of the edge and a pulse signal generated by the set pulse and the reset pulse.

The circuit portion for even-numbered lines in the circuit stage for the light-emitting period includes a shift register for setting 217, a shift register for resetting 219 and a logic gate 221.

The shift register for setting 217 includes M/2 pieces of delay stages corresponding to the half of vertical resolution (the number of even-numbered lines). The shift register for setting 217 is operated based on the first shift clock CK1 synchronized with the horizontal scanning clock and transfers a set pulse to the next delay stage every time the first shift clock CK1 is inputted. The timing of starting transfer is given by a start pulse st21 in the same manner as the shift register for setting 211 for odd-numbered lines. Therefore, the set pulses are outputted from the shift register for setting 211 and the shift register for setting 217 at the same timing.

The shift resister for resetting 219 also includes M/2 pieces of delay stages corresponding to the half of vertical resolution (the number of even-numbered lines). The shift register for resetting 219 is also operated based on the first shift clock CK1 synchronized with the horizontal scanning clock and transfers a reset pulse to the next delay stage every time the first shift clock CK1 is inputted. The timing of starting transfer is given by a start pulse st22 in the same manner as the shift register for resetting 213 for odd-numbered lines. Therefore, the reset pulses are outputted from the shift register for resetting 213 and the shift register for resetting 219 at the same timing.

In the case that the number of horizontal lines is an odd number, both the shift register for setting 217 and the shift register for resetting 219 includes (M-1)/2 pieces of delay stages.

The logic gate 221 is a circuit device generating a pulse signal having a pulse width from the input of the set pulse to the input of the reset pulse. The logic gates 221 corresponding to the number of the power supply control lines DSL for even-numbered lines are arranged.

When the edge of the pulse signal is desired to be set in the middle of the one horizontal scanning period, it is preferable to calculate a logical-product waveform between a pulse waveform giving timing of the edge and a pulse signal generated by the set pulse and the reset pulse.

A switch circuit 223 selects the pulse signal inputted from the logic gate 85 during the non-light emitting period and selects the pulse signal inputted from the logic circuit 215 and the logic circuit 221 during the light emitting period. The switching of selection of pulse signals is realized by a not-shown switching signal. The pulse signals of the logic gate 215 and the logic gate 221 can be also used for the switching signal.

According to the above configuration, the drive signal is supplied from the power supply control line drive unit 203 in the unit of power supply control lines DSL for adjacent two horizontal lines at the same timing. For example, the drive signal is supplied at the same timing to the power supply control lines DSL for the first and second horizontal lines, the power supply control lines DSL for the third and fourth horizontal lines, ..., and the power supply control lines for (M-1)th and M-th horizontal lines, respectively.

In the case that the number of horizontal lines is an odd-number, the drive signal is supplied to the power supply control line DSL for the last M-th row independently.

### (b) Configuration of the timing generator

The timing generator 205 is a circuit device generating timing control signals and clocks necessary for driving the organic EL panel module 201. The timing generator 205 generates, for example, the clock signal CK, the first shift clock CK1, start pulses st1, st2, st11, st12, st21, st22 and the like.

### (C-2) Example of drive timing

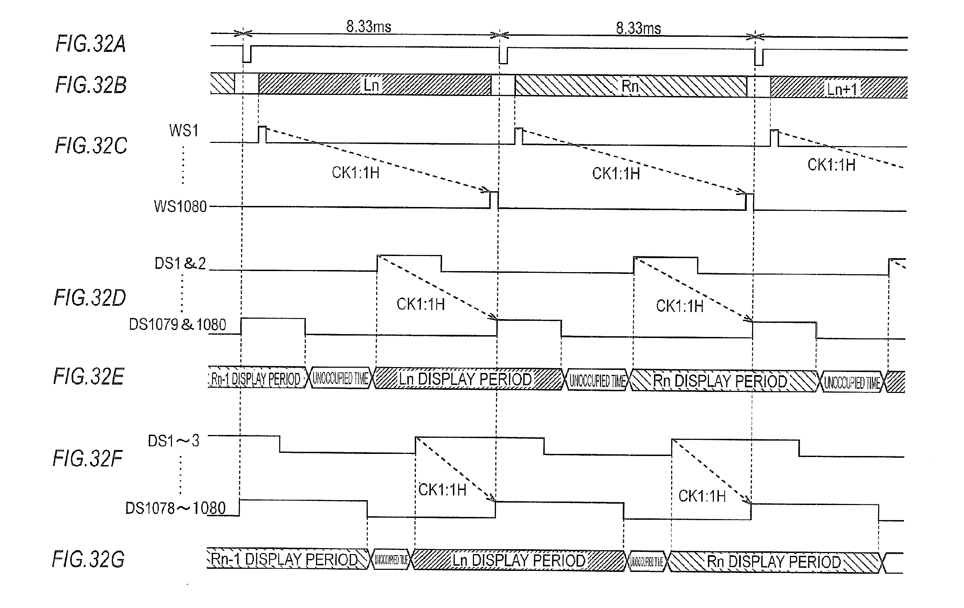

Here, an example of drive timing of the organic EL panel module 201 will be explained with reference to Figs. 32A to 32G. In Figs. 32A to 32G, a case in which the number of horizontal lines (the number of effective scanning lines) of the organic EL panel module 201 is 1080 and 120 frames are displayed per one second will be explained.

Fig. 32A is a waveform diagram is a waveform diagram of a vertical synchronization pulse giving one frame period. In the case of the embodiment, similar to the case of Fig. 18A, the vertical synchronization pulse is given so as to display 120 frames per second, and the period length between the adjacent two vertical synchronization pulses (one frame length) is given at 8.33 ms.

Fig. 32B is a diagram showing an image stream. In the drawing, part of a right-eye image Rn-1 included in the (n-1) th frame, left-eye image Ln and a right-eye image Rn included in the n-th frame, and part of a left-eye image Ln+1 included in the (n+1)th frame are shown. As shown in the drawing, each frame image is inputted between the adjacent two vertical synchronization pulses.

Fig. 32C is a diagram showing the scanning operation of the control pulse driving the writing control line WSL. The control pulse is shift-driven line-sequentially based on the first shift clock CK1 in the same manner as the example of Fig. 18C.

Fig. 32D is a diagram showing lighting periods of respective horizontal lines. In the drawing, sections in which the waveform is in the high level indicate the lighting periods of each horizontal line. In the embodiment, lighting is started in the unit of two lines from the horizontal lines of the first and second rows (horizontal lines 1, 2) to the horizontal lines of a row which is one line previous to the last row and the last row (horizontal lines 1079, 1080) sequentially in synchronization with the first shift clock CK1, and lighting is stopped after a given lighting period is completed. That is, the lighting period of each horizontal line is shifted by the interval of the first shift clock CK1 in the unit of two lines. Accordingly, the scanning speed of the lighting period will be substantially twice as high as the clock speed of the first shift clock CK1.

Fig. 32E shows the display timing of the left-eye image L and the right-eye image R. In the embodiment, the length of the lighting period of each horizontal line is 25% of one frame period (namely, Duty ratio is 25%), and display periods of the left-eye image Ln and the right-eye image Rn of the n-th frame do not overlap. Additionally, a given unoccupied time is secured between the display period of the left-eye image Ln and the display period of the right-eye image Rn. Concerning the unoccupied time, it is sufficient that at least a period of time necessary for open/close control of liquid crystal shutters is secured. Therefore, the length of the lighting period (Duty ratio) can be controlled freely as long as the minimum necessary unoccupied time can be secured.

Figs. 32F, 32G will be described later.

### (C-3) Brief

As described above, the drive frequency necessary for displaying 3D images can be reduced to the half of the related art in the same manner as the Embodiment 1 by applying the drive method according to Embodiment 2. Specifically, 3D images taken or generated at 60 frames per second can be displayed on the screen at 120 frames per second.

In the case of the embodiment, the scanning speed of the lighting period of the organic EL device OLED can be set to be substantially twice as high as the clock speed of the first shift clock CK1 using only the first shift clock CK1. It is not necessary to use two types of shift clocks which are the first shift clock CK1 and the second shift clock CK2, therefore, the circuit scale can be reduced as compared with Embodiment 1. Additionally, it is not necessary to use the second shift clock CK2 which is faster than the first shift clock CK1, therefore, power consumption is reduced as compared with Embodiment 1.

In the case of the embodiment, it is not necessary to prepare drive circuits for 2D images and drive circuits for 3D images and to write the black screen by each frame, similar to the case of Embodiment 1.

### (D) Embodiment 3

### (D-1) System configuration

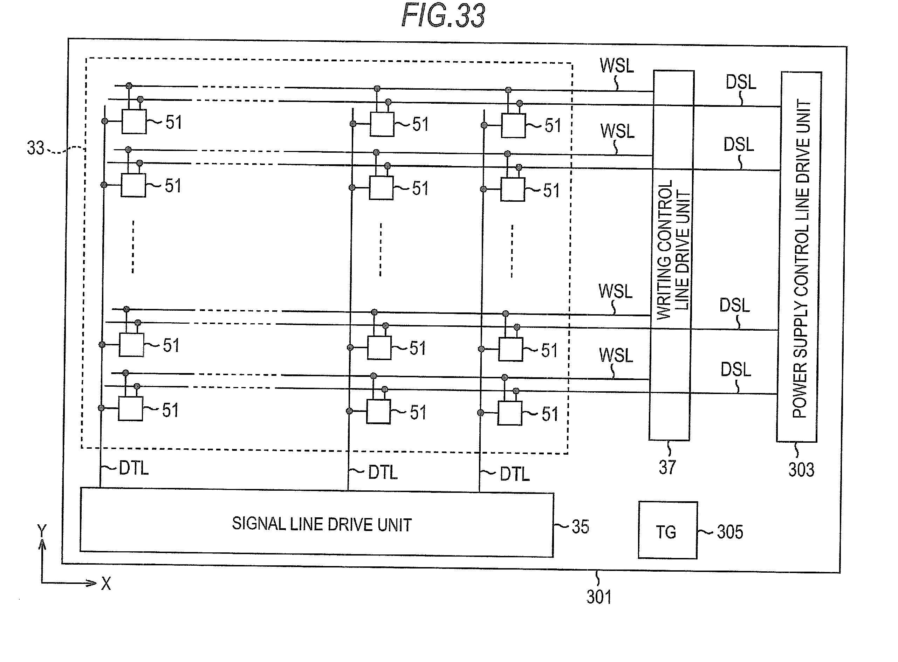

Fig. 33 shows a system configuration example of an organic EL panel module 301 according to the embodiment. In Fig. 33, the same numerals and signs are given to portions corresponding to Fig. 7 and Fig. 30.

An organic EL panel module 301 shown in Fig. 33 includes the pixel array unit 33 and drive circuits thereof, which are the signal line drive unit 35, the writing control line drive unit 37, a power supply control line drive unit 303 and the timing generator 205.

Hereinafter, only the power supply control line drive unit 303 which is a new component will be explained.

### (a) Configuration of the power supply control line drive unit

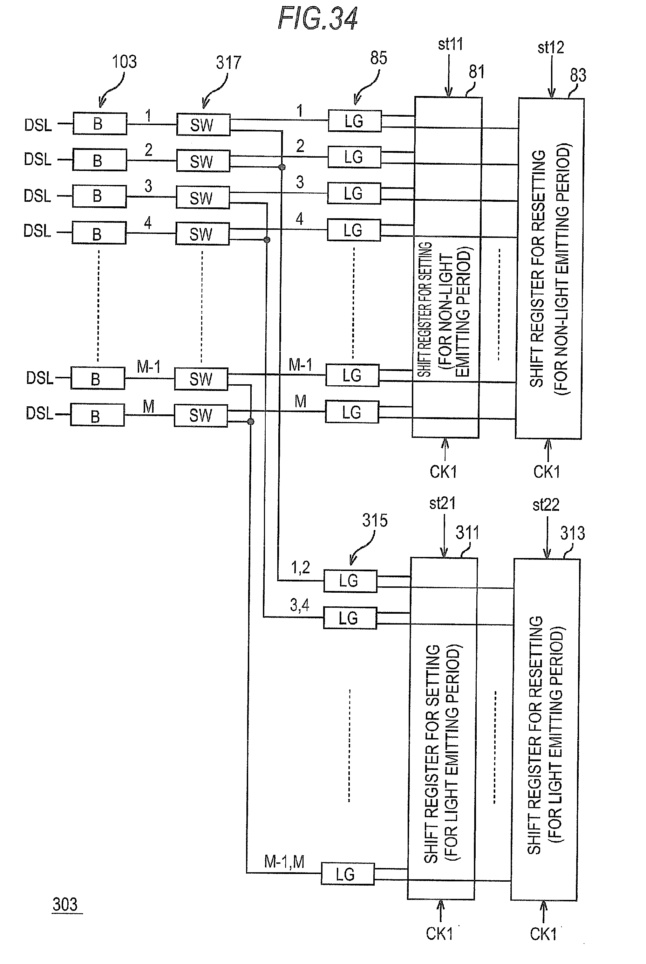

Fig. 34 shows a circuit configuration example of the power supply control line drive unit 303. In Fig. 34, the same numerals and signs are given to portions corresponding to Fig. 13 and Fig. 31. A case in which the number of horizontal lines is an even number and the number of odd-numbered lines corresponds to the number of even-numbered lines will be explained below.

The power supply control line drive unit 303 includes a circuit stage for a non-light emitting period, a circuit stage for a light emitting period, a circuit stage selectively outputting control pulses according to these periods and a circuit stage converting the control pulse of the logic level into the control pulse of the drive level. Among them, the circuit stage for the non-light emitting period and the circuit stage converting the control pulse into the control pulse in the drive level have the same configuration as the power supply control line drive unit 39 of Fig. 13. The circuit stage for the light-emitting period and the circuit stage selectively outputting the control pulses according to periods have different configurations as the power supply control line drive unit 39. Only the circuit stage for the light-emitting period and the circuit stage selectively outputting the control pulses according to the periods which are new components will be explained as follows.

The circuit stage for the light-emitting period includes a shift register for setting 311, a shift register for resetting 313 and a logic gate 315.

The shift register for setting 311 includes M/2 pieces of delay stages corresponding to the half of vertical resolution. The shift register for setting 311 is operated based on the first shift clock CK1 synchronized with the horizontal scanning clock and transfers a set pulse to the next delay stage every time the first shift clock CK1 is inputted. The timing of starting transfer is given by the start pulse st21 in the same manner as the shift register for setting 211 and the shift register for setting 217 of Fig. 31.

The shift resister for resetting 313 also includes M/2 pieces of delay stages corresponding to the half of vertical resolution. The shift register for resetting 313 is also operated based on the first shift clock CK1 synchronized with the horizontal scanning clock and transfers a reset pulse to the next delay stage every time the first shift clock CK1 is inputted. The timing of starting transfer is given by the start pulse st22 in the same manner as the shift register for resetting 213 and the shift register for resetting 219 of Fig. 31.

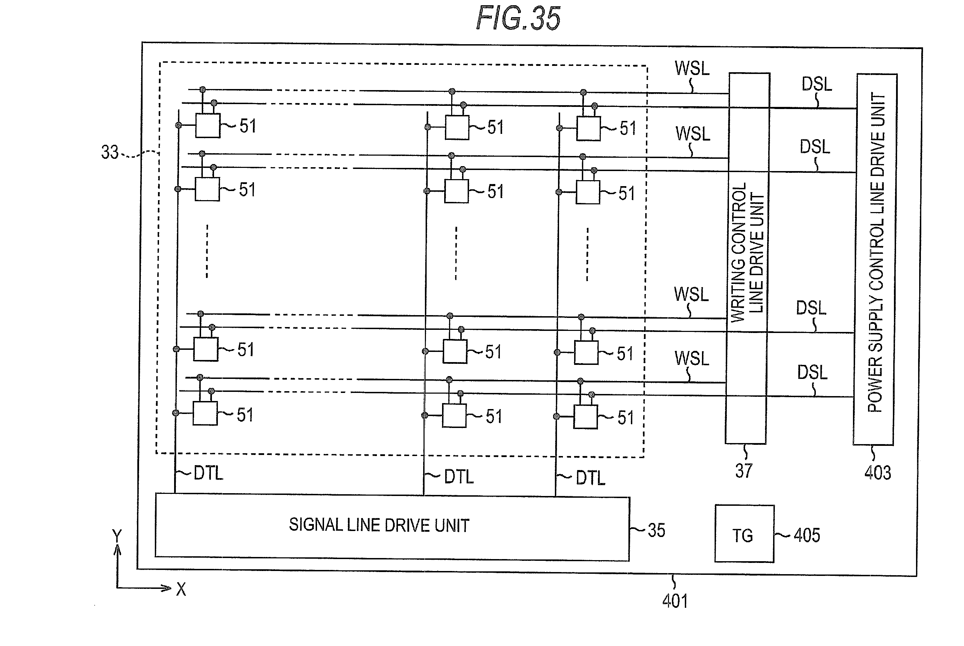

The logic gate 315 is a circuit device generating a pulse signal having a pulse width from the input of the set pulse to the input of the reset pulse. The logic gates 315 corresponding to the half of the number of the power supply control lines DSL are arranged. The pulse signal outputted from one logic gate 315 is divided into two and supplied to switch circuits 317 corresponding to the power supply control lines DSL for adjacent two horizon lines. For example, the logic gate 315 positioned at the top of Fig. 35 supplies the pulse signal to the switch circuits 317 corresponding to the power supply control lines DSL for the first and second horizontal lines, the logic gate 315 positioned at the second row from the top supplies the pulse signal to the switch circuits 317 corresponding to the power supply control lines DSL for the third and fourth horizontal lines, and the logic gate 315 positioned at the bottom (M/2-th gate from the top) supplies the pulse signal to the switch circuits 317 corresponding to the power supply control lines DSL for the (M-1)th and M-th horizontal lines.

In the case that the number of the horizontal lines is an odd-number, the pulse signal is supplied only to the switch circuit 317 corresponding to the power supply control line DSL for the M-th horizontal line from the logic circuit 315 positioned at the bottom.

The switch circuit 317 selects the pulse signal inputted from the logic gate 85 during the non-light emitting period and selects the pulse signal inputted from the logic gate 315 during the light-emitting period. The switching of the selection of the pulse signal is realized by a not-shown switching signal. The pulse signal of the logic gate 315 can be also used as the switching signal.

According to the above configuration, the drive signal is supplied at the same timing from the power supply control line drive unit 303 in the unit of power supply control lines DSL for adjacent two horizontal lines in the same manner as the power supply control line drive unit 203 of Fig. 31.

### (D-3) Brief

As described above, the scanning speed of the organic EL device OLED during the lighting period can be set to be substantially twice as high as the clock speed of the first shift clock CK1 by using only the first shift clock CK1 in the same manner as Embodiment 2 by applying the drive method according to Embodiment 3.

Additionally, the number of the shift registers for setting and the shift registers for resetting during the light-emitting period as well as the number of the logic gates can be reduced as compared with Embodiment 2.

### (D-4) Modification example of Embodiment 3

### a. Other setting examples of scanning speed of the organic EL device OLED during the light emitting period

As described below, the scanning speed of the organic EL device OLED during the lighting period can be set to arbitrary values by changing the number of the power supply control lines DSL driven at the same time.

For example, when the number of the power supply control lines DSL driven at the same time is set to n-lines, thereby setting the scanning speed of the organic EL device OLED during the lighting period to be substantially n-times as high as the first shift clock CK1.

Fig. 32F is a diagram showing lighting periods of respective horizontal lines when the number of the power supply control lines DSL driven at the same time is set to three lines. In the case of Fig. 32F, lighting is started in the unit of three lines from the horizontal lines of the first row to the third row (horizontal lines 1 to 3) to the horizontal lines from the row two-rows previous to the last row to the last row (horizontal lines 1078 to 1080) sequentially in synchronization with the first shift clock CK1, and the lighting is stopped after the given lighting period is completed. That is, the lighting period of each horizontal line is shifted by the interval of the first shift clock CK1 in the unit of three lines. Accordingly, the scanning speed of the lighting period will be substantially three times as high as the clock speed of the first shift clock CK1.

Fig. 32G shows display timing of the left-eye image L and the right-eye image R. In the embodiment, the length of the lighting period of each horizontal line is 50% of one frame period (namely, Duty rate is 50%), and the left-eye image Ln and the right-eye image Rn in the n-th frame do not overlap. Additionally, an unoccupied time is secured between the display period of the left-eye image Ln and the display period of the right-eye image Rn. Concerning the unoccupied time, it is sufficient that at least a period of time necessary for open/close control of liquid crystal shutters is secured. Therefore, the length of the lighting period can be controlled freely as long as the minimum necessary unoccupied time can be secured.

Furthermore, the scanning speed of the organic EL device OLED during the lighting period can be set to substantially be multiples other than an integral multiple of the first shift clock CK1.

### (a-1) System configuration example

Fig. 35 shows a system configuration example of an organic EL panel module 401 according to the modification example. In Fig. 35, the same numerals and signs are given to portions corresponding to Fig. 7.

The organic EL panel module 401 shown in Fig. 35 includes the pixel array portion 33 and drive circuits thereof, which are the signal line drive unit 35, the writing control line drive unit 37, a power supply control line drive unit 403 and a timing generator 405.

Hereinafter, only the power supply control line drive unit 403 and the timing generator 405 which are new components will be explained.

### (a-2) Configuration of the power supply control line drive unit

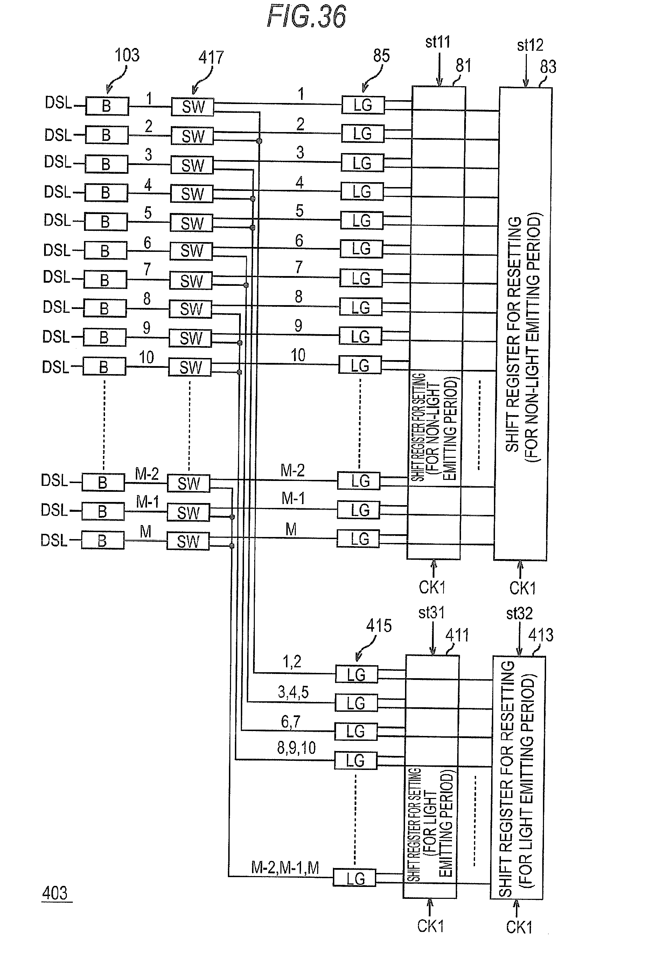

Fig. 36 shows a circuit configuration example of the power supply control line drive unit 403. In Fig. 36, the same numerals and signs are given to portions corresponding to Fig. 13.

The power supply control line drive unit 403 includes a circuit stage for a non-light emitting period, a circuit stage for a light emitting period, a circuit stage selectively outputting control pulses according to these periods and a circuit stage converting the control pulse of the logic level into the control pulse of the drive level. Among them, the circuit stage for the non-light emitting period and the circuit stage converting the control pulse into the control pulse in the drive level have the same configuration as the power supply control line drive unit 39 of Fig. 13. The circuit stage for the light-emitting period and the circuit configuration selectively outputting the control pulses according to periods have different configurations as the power supply control line drive unit 39. Only the circuit stage for the light-emitting period and the circuit stage selectively outputting the control pulses according to the periods which are new components will be explained as follows.

The circuit stage for the light-emitting period includes a shift register for setting 411, a shift register for resetting 413 and a logic gate 415.

The shift register for setting 411 includes 2M/5 pieces of delay stages corresponding to 2/5 of vertical resolution. The shift register for setting 411 is operated based on the first shift clock CK1 synchronized with the horizontal scanning clock and transfers a set pulse to the next delay stage every time the first shift clock CK1 is inputted. The timing of starting transfer is given by a start pulse st31.

The shift resister for resetting 413 also includes 2M/5 pieces of delay stages corresponding to 2/5 of vertical resolution. The shift register for resetting 413 is also operated based on the first shift clock CK1 synchronized with the horizontal scanning clock and transfers a reset pulse to the next delay stage every time the first shift clock CK1 is inputted. The timing of starting transfer is given by a start pulse st32.

The logic gate 415 is a circuit device generating a pulse signal having a pulse width from the input of the set pulse to the input of the reset pulse. The logic gates 415 corresponding to 2/5 of the number of the power supply control lines DSL are arranged. The pulse signal outputted from one logic gate 415 is divided into two or three alternately and supplied to switch circuits 417 corresponding to the power supply control lines DSL for adjacent two or three horizon lines. For example, the logic gate 415 positioned at the top of Fig. 36 supplies the pulse signal to the switch circuits 417 corresponding to the power supply control lines DSL for the first and second horizontal lines, the logic gate 415 positioned at the second row from the top supplies the pulse signal to the switch circuits 417 corresponding to the power supply control lines DSL for the third to fifth horizontal lines, the logic gate 415 positioned at the third row from the top supplies the pulse signal to the power supply control lines DSL for the sixth and seventh horizontal lines, the logic gate 415 positioned at the fourth row from the top supplies the pulse signal to the power supply control lines DSL for the eighth to ten horizontal lines, and the logic gate 415 positioned at the bottom (2M/5-th gate from the top) supplies the pulse signal to the switch circuits 417 corresponding to the power supply control lines DSL for the (M-2)th to M-th horizontal lines.

In the case that the number of horizontal lines is not a multiple of 5, the number of branches of the pulse signal outputted from the logic gate 415 at the bottom is set to 1 or 2 in accordance with the number of horizontal lines.

The switch circuit 417 selects the pulse signal inputted from the logic gate 85 during the non-light emitting period and selects the pulse signal inputted from the logic gate 415 during the light-emitting period. The switching of the selection of the pulse signal is realized by a not-shown switching signal. The pulse signal of the logic gate 415 can be also used as the switching signal.

### (a-3) Configuration of the timing generator

The timing generator 405 is a circuit device generating timing control signals and clocks necessary for driving the organic EL panel module 401. The timing generator 405 generates, for example, the clock signal CK, the first shift clock CK1, start pulses st1, st2, st31, st32 and the like.

### (a-4) Brief

According to the above configuration, the drive signal is supplied at the same timing from the power supply control line drive unit 403 in the unit of power supply control lines DSL for adjacent two or three horizontal lines.

Accordingly, the scanning speed of the organic EL device OLED during the lighting period can be set to be substantially 2.5 times (=5/2) as high as the clock speed of the first shift clock CK1 by using only the first shift clock CK1.

For example, the number of the power supply control lines DSL driven at the same time is set to 2, 3, 2, 2, 3 and 2 lines... repeatedly, thereby setting the scanning speed of the organic EL device OLED in the lighting period to be substantially 2.33 times (=7/3) as high as the clock speed of the first shift clock CK1. Also, the number of the power supply control lines DSL driven at the same time is set to 3, 2, 3, 3, 2 and 3 lines... repeatedly, thereby setting the scanning speed of the organic EL device OLED in the lighting period to substantially 2.66 times (=8/3) as high as the clock speed of the first shift clock CK1.

As described above, the number of combinations of the power supply control lines DSL driven at the same time is changed, thereby arbitrarily setting the substantial scanning speed of the organic EL device OLED during the lighting period.

### (E) Other embodiments

### (E-1) Other configurations of the sub-pixel

In the case of the above embodiment, the case in which the sub-pixel 51 includes three N-channel thin-film transistors has been explained.

However, the thin-film transistors included in the sub-pixel 51 may be P-channel thin-film transistors.

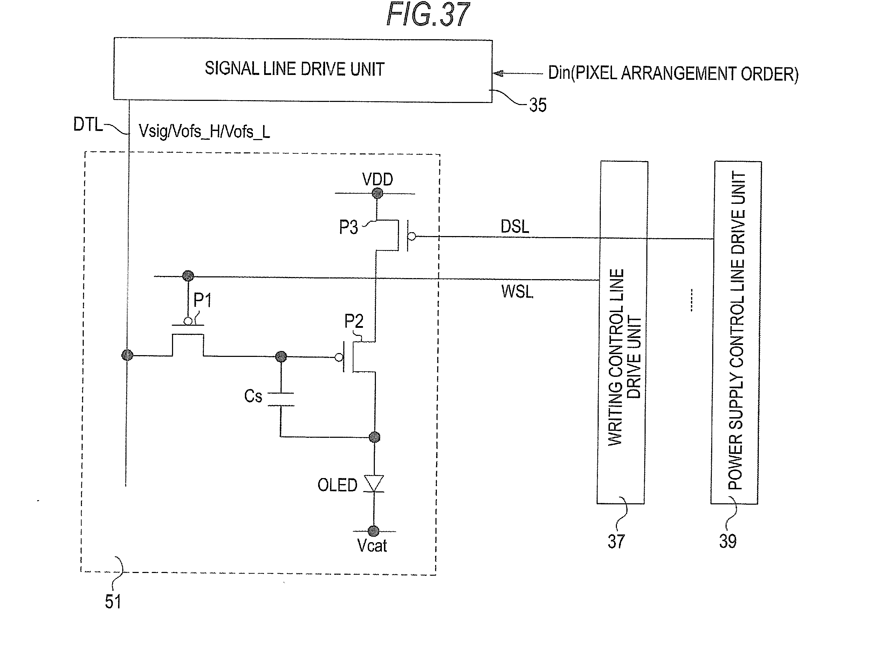

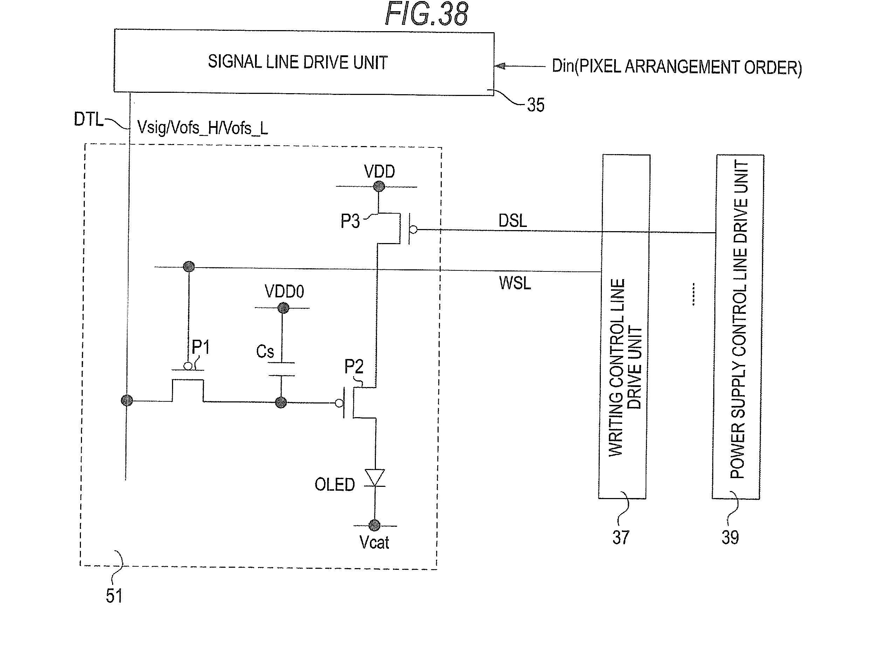

Fig. 37 and Fig. 38 show circuit examples of the above type. Fig. 37 is an example in which only the thin-film transistors are all replaced with P-channel thin-film transistors while the connection relation of the sub-pixel 51 according to the embodiment is maintained. On the other hand, Fig. 38 is a circuit example in which connection of the storage capacitor Cs is changed. In the case of Fig. 38, one of electrodes of the storage capacitor Cs is connected to a fixed power supply line (VDD0).

The number of thin-film transistors included in the sub-pixel 51 may be four or more, or may be two. The drive technique according to the embodiments of the invention can be applied to any circuit configuration of the sub-pixel 51 as long as the circuit can control supply and stop of the drive power supply in the unit of horizontal lines.

### (E-2) Notification device for switching timing

In the case of the above embodiments, the case in which the switching timing of the liquid crystal shutters is notified to the liquid crystal shutter glasses 9 by infrared communication has been explained.

However, wireless communication techniques which can be used at present or in near future can be applied for the notification of switching timing.

### (E-3) Product examples

### (a) System configuration

In the above description, the panel configuration and the drive method only relating to the organic EL panel module have been explained. However, the above organic EL panel module is also distributed as product forms mounted on various kinds of electronic apparatuses. Hereinafter, examples of mounting the organic EL panel module on other electronic apparatuses are shown.

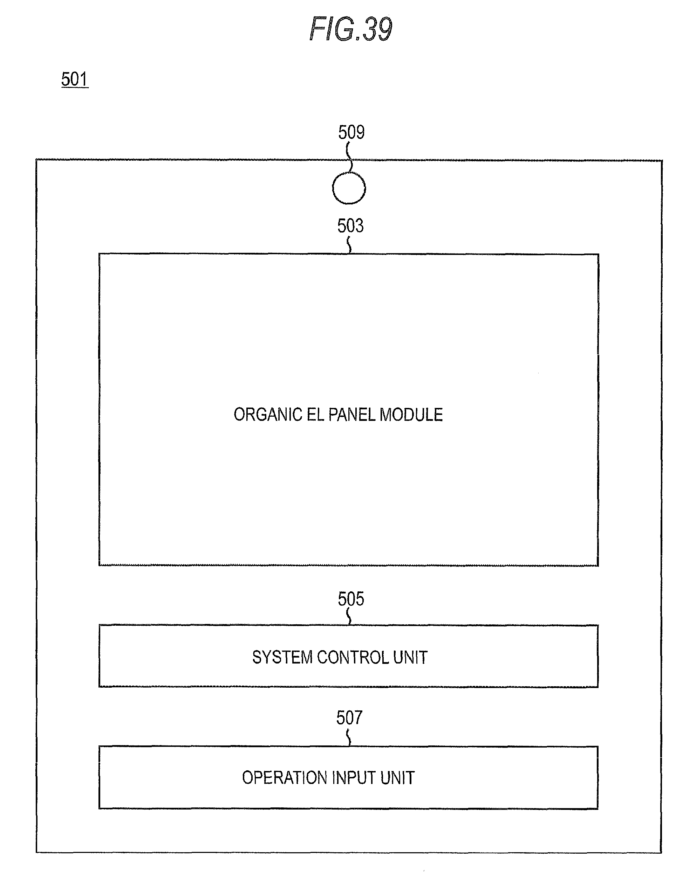

Fig. 39 is a conceptual configuration example of an electronic apparatus 501. The electronic apparatus 501 includes a display panel module 503 on which the above-described drive circuits are mounted, a system control unit 505, an operation input unit 507 and a switching timing notification device 509.

The processing contents executed by the system control unit 505 are different according to the product form of the electronic apparatus 501. The operation input unit 507 is a device receiving operation input with respect to the system control unit 505. As the operation input unit 507, for example, mechanical interfaces such as switches and buttons, a graphic interface and so on are used.

The switching timing notification device 509 may be not only integrally attached to a casing of the electronic apparatus 501 but also may be attached to the casing of the electronic apparatus 501 as an independent external device as shown in Fig. 39.

### (b) Specific examples

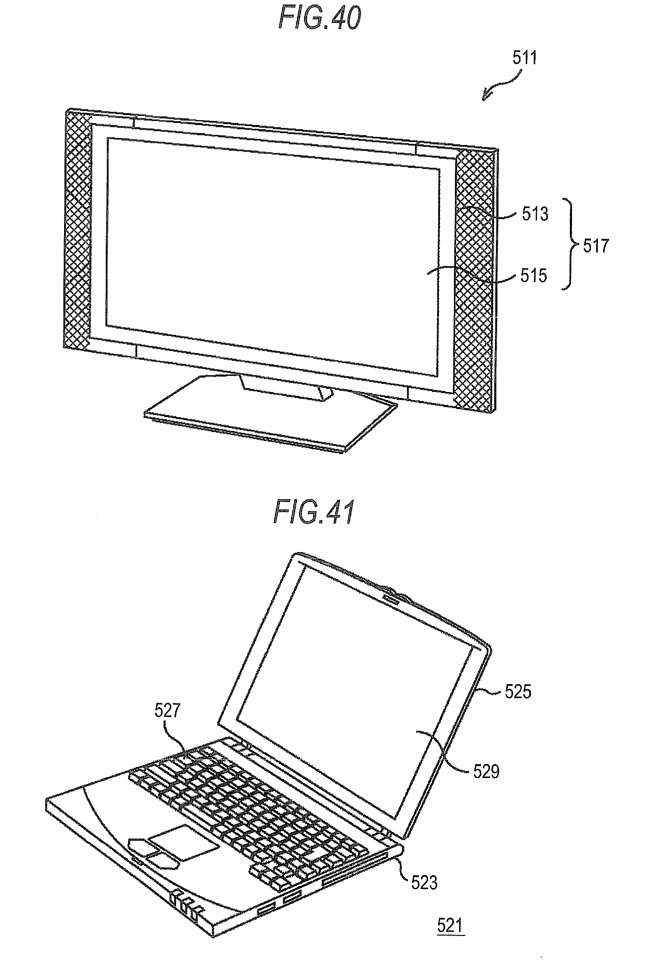

Fig. 40 shows an appearance example in the case that the electronic apparatus is a television receiver. A television receiver 511 has a structure in which a display screen 515 and a switching timing notification device 517 are arranged in the front of a casing 513. The portion of the display screen 515 here corresponds to the organic EL panel module explained in the embodiments.

Moreover, for example, a computer is assumed as this kind of the electronic apparatus. Fig. 41 shows an appearance example of a notebook computer 521.

The notebook computer 521 includes a lower casing 523, an upper casing 525, a keyboard 527, a display screen 529 and a switching timing notification device 531. Among them, the portion of the display screen 529 corresponds to the organic EL panel module explained in the embodiments.

Additionally, a game device, an electronic book and an electronic dictionary and the like are assumed as the electronic apparatuses.

### (E-4) Other display examples

In the above embodiments, the case in which the invention is applied to the organic EL panel module has been explained.

However, the configuration of the above power supply system circuit can be applied to other self luminous display panel modules.

For example, the invention can be applied to a display device in which LEDs are arranged in a matrix state and a display panel module in which light-emitting devices having a diode structure are arranged on a screen. For example, the invention can be applied also to an inorganic EL panel.

### (E-5) Others

Concerning the above embodiments, various modification examples can be considered within a scope of the gist of the invention. Various types of modification examples and application examples created or combined based on the description of the specification can be also considered.

The present application contains subject matter related to that disclosed in Japanese Priority Patent Application JP 2009-292901 filed in the Japan Patent Office on December 24, 2009.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An self luminous shutter type display panel module comprising:
a pixel array unit in which sub-pixels each having a current-driven self luminous device and a pixel circuit controlling the drive of the self luminous device are arranged in a matrix;
a signal line drive unit driving signal lines;
a writing control line drive unit controlling writing of potentials appearing at the signal lines to the sub-pixels shift-driven line-sequentially based on a scanning clock of a given frequency; and
a power supply control unit controlling supply and stop of drive power supply with respect to the sub-pixels, which supplies drive power supply based on the scanning clock and defining a lighting period of the self luminous devices, shift-driven in units of 2 or 3 horizontal lines at the same timing sequentially in the order of completion of signal potential writing, so that the scanning speed of the drive power supply is in the range of 2 to 3 times the scanning speed of writing of potentials for the lines of a respective frame;
the power supply control unit controlling supply and stop of drive power supply with respect to the sub-pixels after a respective waiting time of a given length passes after completion of the signal potential writing of a first horizontal line in which the signal potential writing is completed first, as well as controlling the length of the lighting period in one frame to be the same in all horizontal lines,
wherein the lighting period is set so that there is a period of unoccupied non-lighting time between the end of lighting the last horizontal line and the start of lighting the first horizontal line between adjacent frames.

2. The display panel module according to claim 1,
wherein the signal line drive unit, the writing control line drive unit and the power supply control unit are operated at common drive timing in either case in which 2D images and 3D images are displayed on a screen.

3. The display panel module according to claim 2,
wherein the frequency of the scanning clock is set to correspond to a horizontal scanning frequency.

4. A drive method of an self luminous shutter type pixel array unit in which sub-pixels each having a current-driven self luminous device and a pixel circuit controlling the drive of the self luminous device are arranged in a matrix, the method comprising the steps of:
controlling writing of potentials appearing at the signal lines to the sub-pixels, shift-driven line-sequentially based on a scanning clock of a given frequency; and
supplying drive power supply based on the scanning clock defining a lighting period of the self luminous devices, shift-driven in units of 2 or 3 horizontal lines at the same timing sequentially in the order of completion of signal potential writing, so that the scanning speed of the drive power supply is in the range of 2 to 3 times the scanning speed of writing of potentials for the lines of a respective frame, after a respective waiting time of a given length passes after completion of the signal potential writing of a first horizontal line in which the signal potential writing is completed first, as well as controlling the length of the lighting period in one frame to be the same in all horizontal lines,
wherein the lighting period is set so that there is a period of unoccupied non-lighting time between the end of lighting the last horizontal line and the start of lighting the first horizontal line between adjacent frames.

5. An electronic apparatus comprising:
a display panel module according to claim 1.

## Patentansprüche

1. Selbstleuchtendes Anzeigetafelmodul vom Verschlusstyp, das Folgendes umfasst:
eine Pixelmatrixeinheit, in der Subpixel, die jeweils eine stromangesteuerte selbstleuchtende Vorrichtung und eine Pixelschaltung, die die Ansteuerung der selbstleuchtenden Vorrichtung steuert, aufweisen, in einer Matrix angeordnet sind;
eine Signalleitungsansteuerungseinheit, die Signalleitungen ansteuert;
eine Schreibsteuerleitungsansteuerungseinheit, die das Schreiben von Potenzialen, die auf den Signalleitungen zu den Subpixeln auftreten, basierend auf einem Abtasttakt einer vorgegebenen Frequenz umschaltungsangesteuert zeilensequentiell steuert; und
eine Leistungsversorgungssteuereinheit, die die Versorgung und den Abbruch der Ansteuerungsleistungsversorgung in Bezug auf die Subpixel steuert, die die Ansteuerungsleistungsversorgung basierend auf dem Abtasttakt, der eine Beleuchtungsdauer der selbstleuchtenden Vorrichtungen definiert, umschaltungsgesteuert in Einheiten von 2 oder 3 horizontalen Zeilen mit derselben Zeitvorgabe sequenziell in der Reihenfolge der Vervollständigung des Signalpotenzialschreibens versorgt, so dass sich die Abtastgeschwindigkeit der Ansteuerungsleistungsversorgung in dem Bereich von 2 bis 3 Mal der Abtastgeschwindigkeit des Schreibens von Potenzialen für die Zeilen eines entsprechenden Rahmens befindet;
die Leistungsversorgungssteuereinheit, die die Versorgung und den Abbruch der Ansteuerungsleistungsversorgung in Bezug auf die Subpixel steuert, nachdem eine entsprechende Wartezeit einer vorgegebenen Länge nach der Vervollständigung des Signalpotenzialschreibens einer ersten horizontalen Zeile, in der das Signalpotenzialschreiben als erstes vervollständigt ist, verstrichen ist, und die auch steuert, dass die Länge der Beleuchtungsdauer in einem Rahmen dieselbe wie in allen horizontalen Zeilen ist,
wobei die Beleuchtungsdauer derart eingestellt ist, dass eine Zeitspanne einer Nichtbeleuchtungsleerlaufzeit zwischen dem Ende der Beleuchtung der letzten horizontalen Zeile und dem Beginn der Beleuchtung der ersten horizontalen Zeile benachbarter Rahmen auftritt.

2. Anzeigetafelmodul nach Anspruch 1, wobei die Signalleitungsansteuerungseinheit, die Schreibsteuerleitungsansteuerungseinheit und die Leistungsversorgungssteuereinheit in jedem Fall, in dem 2D-Bilder und 3D-Bilder auf einem Bildschirm angezeigt werden, mit einer gemeinsamen Ansteuerungszeitvorgabe bedient werden.

3. Anzeigetafelmodul nach Anspruch 2, wobei die Frequenz des Abtasttaktes eingestellt ist, um einer horizontalen Abtastfrequenz zu entsprechen.

4. Ansteuerungsverfahren einer selbstleuchtenden Pixelmatrixeinheit vom Verschlusstyp, in der Subpixel, die jeweils eine stromangesteuerte selbstleuchtende Vorrichtung haben, und eine Pixelschaltung, die die Ansteuerung der selbstleuchtenden Vorrichtung steuert, in einer Matrix angeordnet sind, wobei das Verfahren die folgenden Schritte umfasst:
umschaltungsgesteuertes zeilensequentielles Steuern des Schreibens von Potenzialen, die auf den Signalleitungen zu den Subpixeln auftreten, basierend auf einem Abtasttakt einer vorgegebenen Frequenz; und
umschaltungsgesteuertes Versorgen der Ansteuerungsleistungsversorgung basierend auf dem Abtasttakt, der eine Beleuchtungsdauer der selbstleuchtenden Vorrichtungen definiert, in Einheiten von 2 oder 3 horizontalen Zeilen mit derselben Zeitvorgabe sequenziell in der Reihenfolge der Vervollständigung des Signalpotenzialschreibens, so dass sich die Abtastgeschwindigkeit der Ansteuerungsleistungsversorgung in dem Bereich von 2 bis 3 Mal der Abtastgeschwindigkeit des Schreibens von Potenzialen für die Zeilen eines entsprechenden Rahmens befindet, nachdem eine entsprechende Wartezeit einer vorgegebenen Länge nach der Vervollständigung des Signalpotenzialschreibens einer ersten horizontalen Zeile, in der das Signalpotenzialschreiben als erstes vervollständigt ist, verstrichen ist, und die auch steuert, dass die Länge der Beleuchtungsdauer in einem Rahmen dieselbe, wie in allen horizontalen Zeilen, ist,
wobei die Beleuchtungsdauer derart eingestellt ist, dass eine Zeitspanne einer Nichtbeleuchtungsleerlaufzeit zwischen dem Ende der Beleuchtung der letzten horizontalen Zeile und dem Beginn der Beleuchtung der ersten horizontalen Zeile benachbarter Rahmen auftritt.

5. Elektronische Vorrichtung, die Folgendes umfasst:
ein Anzeigetafelmodul nach Anspruch 1.

## Revendications

1. Panneau d'affichage auto-lumineux du type à obturateur comprenant :
une unité de matrice de pixels dans laquelle des sous-pixels ayant chacun un dispositif auto-lumineux commandé par le courant et un circuit de pixel commandant l'excitation du dispositif auto-lumineux sont agencés en matrice ;
une unité d'excitation de lignes de signaux qui excite des lignes de signaux ;
une unité d'excitation de lignes de commande d'écriture qui commande l'écriture de potentiels apparaissant sur les lignes de signaux allant aux sous-pixels, par décalage et séquentiellement par lignes en fonction d'une horloge de balayage d'une fréquence données ; et
une unité de commande d'alimentation électrique qui commande l'alimentation et l'arrêt de l'alimentation électrique d'excitation des sous-pixels, laquelle fournit l'alimentation électrique d'excitation en fonction de l'horloge de balayage et définissant une période d'éclairage des dispositifs auto-lumineux, par décalage à raison d'unités de 2 ou 3 lignes horizontales en même temps et séquentiellement dans l'ordre de réalisation de l'écriture des potentiels des signaux, de telle sorte que la vitesse de balayage de l'alimentation électrique d'excitation soit 2 à 3 fois la vitesse de balayage de l'écriture de potentiels des lignes d'une trame respective ;
l'unité de commande d'alimentation électrique commandant l'alimentation et l'arrêt de l'alimentation électrique d'excitation des sous-pixels après qu'une période d'attente respective d'une longueur donnée se soit écoulée après la réalisation de l'écriture de potentiel de signal d'une première ligne horizontale dans laquelle l'écriture de potentiel de signal est réalisée en premier, ainsi que commandant la longueur de la période d'éclairage dans une trame pour qu'elle soit identique à celle dans toutes les lignes horizontales,
dans lequel la période d'éclairage est réglée de telle sorte qu'il existe une période de temps de non-éclairage vacante entre la fin de l'éclairage de la dernière ligne horizontale et le début de l'éclairage de la première ligne horizontale entre des trames adjacentes.

2. Module de panneau d'affichage selon la revendication 1,
dans lequel l'unité d'excitation de lignes de signaux, l'unité d'excitation de lignes de commande d'écriture et l'unité de commande d'alimentation électrique sont actionnées au même temps d'excitation que des images 2D ou des images 3D soient affichées sur un écran.

3. Module de panneau d'affichage selon la revendication 2,
dans lequel la fréquence de l'horloge de balayage est réglée pour correspondre à une fréquence de balayage horizontal.

4. Procédé de commande d'une unité de matrice de pixels auto-lumineuse du type à obturateur dans laquelle les sous-pixels ayant chacun un dispositif auto-lumineux commandé par le courant et un circuit de pixel commandant l'excitation du dispositif auto-lumineux sont agencés en matrice, le procédé comprenant les étapes consistant à :
commander l'écriture de potentiels apparaissant sur les lignes de signaux allant aux sous-pixels, par décalage et séquentiellement par lignes en fonction d'une horloge de balayage d'une fréquence donnée ; et
fournir une alimentation électrique d'excitation en fonction de l'horloge de balayage définissant une période d'éclairage des dispositifs auto-lumineux, par décalage à raison d'unités de 2 ou 3 lignes horizontales en même temps et séquentiellement dans l'ordre de réalisation de l'écriture des potentiels de signaux, de telle sorte que la vitesse de balayage de l'alimentation électrique d'excitation soit 2 à 3 fois la vitesse de balayage de l'écriture de potentiels des lignes d'une trame respective, après qu'une période d'attente respective d'une longueur donnée se soit écoulée après la réalisation de l'écriture de potentiel de signal d'une première ligne horizontale dans laquelle l'écriture de potentiel de signal est réalisée en premier, ainsi que commandant la longueur de la période d'éclairage dans une trame pour qu'elle soit identique à celle dans toutes les lignes horizontales,
dans lequel la période d'éclairage est réglée de telle sorte qu'il existe une période de temps de non-éclairage vacante entre la fin de l'éclairage de la dernière ligne horizontale et le début de l'éclairage de la première ligne horizontale entre des trames adjacentes.

5. Appareil électronique comprenant :
un module de panneau d'affichage selon la revendication 1.
